# EUROPEAN PATENT APPLICATION

(11) **EP 4 607 928 A1**
(43) Date of publication of application: **27.08.2025**
(21) Application number: 24305295.8
(22) Date of filing: 23.02.2024
(51) Int. Cl.: H04N 19/597, H04N 19/70

(54) **SIGNALING INVALID DEPTH SAMPLES**

(71) Applicant: Beijing Xiaomi Mobile Software Co., Ltd., Beijing 100085 (CN)
(72) Inventor: ALIXIOU, Evangelos, 1018LG Amsterdam (NL); THOMAS, Emmanuel, 2611WD Delft (NL); POTETSIANAKIS, Emmanouil, 2563 TZ The Hague (NL)
(74) Representative: RVDB Rennes

(57) **Abstract**

The present disclosure relates to a method of signaling at least one invalid depth sample in at least one depth image, the method comprising:
- obtaining (110) an invalid depth sample information representing the at least one invalid depth sample, each invalid depth sample representing a sample in the at least one depth image associated with a missing, undefined or unknown depth value; and
- signaling (120), in a binary data structure, the invalid depth sample information as metadata of the at least one depth image.

## Description

### FIELD

The present disclosure generally relates to signaling relative to a still image or video frame of a video. Particularly, but not exclusively, the present disclosure concerns signaling an invalid depth sample information representing at least one invalid depth sample in at least one depth image.

### BACKGROUND

Invalid depth samples are defined as the samples of a depth image with missing, unknown or undefined depth value (measurement).

Existing technologies transmit the invalidity information in the image domain of the depth representation. That is, certain values within the range of possible depth sample values are reserved in order to indicate that they are invalid (e.g., the value "0").

This usual approach leads to the following issues. First, there can be ambiguity between the specific invalid value and a real value, e.g., for the case the value "0" is used, does it mean invalid depth value, infinite value, or no/zero distance from the depth camera. Next, no lossy transformation (e.g., colour space conversion for colorization) or processing (e.g., compression) can be applied, since reconstruction errors due to these lossy processes may lead to change the depth samples that had originally invalid depth values. In other terms, only lossless processes can be used to guarantee that invalid depth samples will not be lost and that no real depth samples will not be transformed to invalid depth samples. Next, to update the invalid depth samples present in an encoded depth image, it requires decoding, changing the targeted samples and re-encoding the depth images. Next, to know the position of invalid depth samples present in an encoded depth image, one needs to decode it first and scan each depth sample value. Next, one needs to know the depth camera used to obtain the depth image in order to know how to identify invalid depth samples it may contain.

At least one exemplary embodiment of the present disclosure has been devised with the foregoing in mind.

### SUMMARY

The following section presents a simplified summary of the at least one exemplary embodiment in order to provide a basic understanding of some aspects of the present disclosure. This summary is not an extensive overview of an exemplary embodiment. It is not intended to identify key or critical elements of an exemplary embodiment. The following summary merely presents some aspects of the at least one exemplary embodiment in a simplified form as a prelude to the more detailed description provided elsewhere in the document.

According to a first aspect of the present disclosure, there is provided a method of signaling at least one invalid depth sample in at least one depth image, the method comprising:
- obtaining an invalid depth sample information representing the at least one invalid depth sample, each invalid depth sample representing a sample in the at least one depth image associated with a missing, undefined or unknown depth value; and
- signaling, in a binary data structure, the invalid depth sample information as metadata of the at least one depth image.

According to a second aspect of the present disclosure, there is provided an image processing method comprising:
- receiving a binary data structure comprising an invalid depth sample information representing at least one invalid depth sample in at least one depth image, each invalid depth sample representing a sample in the at least one depth image associated with a missing, undefined or unknown depth value; and
- deriving the at least one invalid depth sample from the invalid depth sample information.

In some embodiments, the invalid depth sample information may indicate a region in the at least one depth image.

In some embodiments, the invalid depth sample information may be defined based on at least one characteristic of the region.

In some embodiments, the invalid depth sample information may be defined based on horizontal and/or vertical lines in the at least one depth image, delimiting at least one band left, right, above or below the lines.

In some embodiments, the region may be a corner band defined by a side of the at least one depth image and a length of the corner band.

In some embodiments, the region may be at least one band of invalid depth samples in the at least one depth image defined by orientation, position and width of said at least one band.

In some embodiments, the invalid depth sample information may indicate integer mask of invalid depth samples in the at least one depth image.

In some embodiments, the invalid depth sample information may indicate a shape mask of invalid depth samples in the at least one depth image, said shape mask being expressed as a collection of geometric shapes of invalid depth samples in a depth image.

In some embodiments, the metadata of the at least one depth image representing the invalid depth sample information may be signaled in video bitstream.

In some embodiments, the metadata of the at least one depth image representing the invalid depth sample information may be signaled as part of a Supplemental Enhancement Information message.

In some embodiments, a sequence of at least one integer mask being obtained, each integer mask corresponding to one of the at least one depth image, and wherein a sequence of the at least one depth image may be signaled as a sequence of primary pictures constituting a primary picture layer and the sequence of integer masks may be signaled as a sequence of invalid depth sample auxiliary pictures constituting an auxiliary picture layer and may contain a Supplemental Enhancement Information message or Video Parameter Set to indicate that the type of auxiliary picture layer is invalid depth sample information

In some embodiments, the metadata of the at least one depth image representing the invalid depth sample information may be signaled in a file format.

In some embodiments, the file format may be based on ISOBMFF formatted file that conforms to the standard ISO/IEC 14496-12.

In some embodiments, the metadata of the at least one depth image representing the invalid depth sample information may be signaled in the file format as static metadata for the duration of a video track as defined in ISOBMFF formatted file that conforms to the standard ISO/IEC 14496-12.

In some embodiments, the metadata of the at least one depth image representing the invalid depth sample information may be signaled in the file format as dynamic metadata.

In some embodiments, dynamic metadata signaling the invalid depth sample information may be carried in a timed metadata track as defined in ISOBMFF formatted file that conforms to the standard ISO/IEC 14496-12.

In some embodiments, dynamic metadata signaling the invalid depth sample information may be carried in an auxiliary video track as defined in ISOBMFF formatted file that conforms to the standard ISO/IEC 14496-12.

In some embodiments, the auxiliary video track may contain at least one frame of integer masks of invalid depth samples in the at least one depth image.

In some embodiments, the method may further comprise assigning a value to each invalid depth sample.

In some embodiments, the value assigned to each invalid depth sample may be determined by a value of a valid depth sample indicating that a sample in the at least one depth image is a depth value.

According to a third aspect, there is provided an apparatus comprises means for performing one of the method of the first and/or second aspects.

According to a fourth aspect, there is provided a computer program product including instructions which, when the program is executed by one or more processors, causes the one or more processors to carry out a method of the first and/or second aspects.

According to a fifth aspect, there is provided a non-transitory storage medium carrying instructions of program code for executing a method of the first and/or second aspects.

The specific nature of at least one of the exemplary embodiments as well as other objects, advantages, features and uses of said at least one of exemplary embodiments will become even more apparent from the following description of examples taken in conjunction with the accompanying drawings.

### BRIEF DESCRIPTION OF THE DRAWINGS

Reference will now be made, by way of example, to the accompanying drawings which show exemplary embodiments of the present disclosure, and in which:
**Figure 1** shows schematically an example of depth value associating with a 3D point of a scene, assuming an ideal pinhole camera model.
**Figure 2** shows of a depth image and a colour image depicting the same model.
**Figure 3** shows schematically the principles of a passive stereo vision method using a left and a right cameras.
**Figure 4** shows schematically the principles of an active stereo vision method using a left and a right cameras.
**Figure 5** shows schematically the principle of a structured light method.
**Figure 6** shows an example of depth sensor using the time-of-light (ToF) method.
**Figure 7** shows an example of occluded regions in stereo vision.
**Figure 8** shows an example of a diagram of occluded regions when the Intel^{®} RealSense^{™} D400 series is used for capturing depth data.
**Figure 9** shows an example illustrating how the compression efficiency may be improved according to some embodiments.
**Figure 10** shows a schematic block diagram of steps of a method of signaling at least one invalid depth sample in at least one depth image in a binary data structure, according to some embodiments.
**Figure 11** shows a schematic block diagram of an example of the image processing method 200, according to some embodiments.
**Figure 12** shows the general syntax of a Network Abstraction Layer (NAL) unit in prior art.
**Figure 13** shows an example of the general syntax of a NAL unit of **Figure 12****,** according to some embodiments.
**Figure 14** shows an example **invalid_depth_samples_corner_band**
   ( payloadSize ) Supplemental Enhancement Information (SEI) message, according to some embodiments.
**Figure 15** shows an example of **invalid_depth_samples_bands** ( payloadSize ) SEI message carrying the invalid depth sample information indicating at least one band in the at least one depth image, according to some embodiments.
**Figure 16** shows an example of **invalid depth samples binary_mask** ( payloadSize ) SEI message carrying the invalid depth sample information indicating a binary mask of invalid depth samples in the at least one depth image, according to some embodiments.
**Figure 17** shows an example of **invalid depth samples binary_mask** ( payloadSize ) SEI message carrying the invalid depth sample information indicating a binary mask of invalid depth samples in the at least one depth image, according to some embodiments.
**Figure 18** shows an example of **scalability_dimension_info** ( payloadSize ) SEI message carrying the invalid depth sample information as auxiliary picture layers, according to some embodiments.
**Figure 19** shows an example of **invalid_depth_samples_shape_mask** ( payloadSize ) SEI message carrying the invalid depth sample information indicating a mask of invalid depth samples in the at least one depth image, according to some embodiments.
**Figure 20** shows an example of a MetaBox carrying static metadata signaling the invalid depth sample information according to some embodiments.
**Figure 21** shows an example of a timed metadata track carrying dynamic metadata signaling the invalid depth sample information according to some embodiments.
**Figure 22** shows an example of an auxiliary video track carrying dynamic metadata signaling the invalid depth sample information according to some embodiments.
**Figure 23** shows a schematic block diagram illustrating an example of a system in which various aspects and exemplary embodiments are implemented.

Similar or same elements are referenced with the same reference numbers.

### DESCRIPTION OF EXEMPLARY EMBODIMENTS

At least one of the exemplary embodiments is described more fully hereinafter with reference to the accompanying figures, in which examples of at least one of the exemplary embodiments are depicted. An exemplary embodiment may, however, be embodied in many alternate forms and should not be construed as limited to the examples set forth herein. Accordingly, it should be understood that there is no intent to limit exemplary embodiments to the particular forms disclosed. On the contrary, the present disclosure is intended to cover all modifications, equivalents, and alternatives falling within the spirit and scope of the present disclosure.

An image may be a video frame belonging to a video, i.e. a temporal sequence of video frames. A temporal relationship exists between the video frames of a video.

An image may also be a still image.

An image comprises at least one component (also called channel) determined by a specific picture/video format which specifies all information relative to samples values and all information which may be used by a display unit and/or any other device to display and/or to decode image data related to said image in order to generate pixel values.

An image comprises at least one component usually expressed in the shape of an 2D array of samples.

A monochrome image comprises a single component and a color image (also denoted texture image) may comprise three components.

For example, a color image may comprise a luma (or luminance) component and two chroma components when the image/video format is the well-known (Y,Cb,Cr) format or may comprise three color components (one for Red, one for Green and one for Blue) when the image/video format is the well-known (R,G,B) format. The image/video format may also be the well-known (R,G,B,D) forma (D for depth information).

An image may also be an infra-red (IR) image.

Each component of an image may comprise a number of samples relative to a number of pixels of a display screen on which the image is intended to be displayed. For instance, the number of samples comprised in a component may be the same as, or a multiple (or fraction) of, a number of pixels of a displaying surface on which the image is intended to be displayed.

The number of samples comprised in a component may also be a multiple (or fraction) of a number of samples comprised in another component of a same image.

For example, in the case of an image/video format comprising a luma component and two chroma components like the (Y,Cb,Cr) format, dependent on the color format considered, the chroma component may contain half the number of samples in width and/or height, relative to the luma component.

A sample is the smallest visual information unit of a component composing an image. A sample value may be, for example a luma or chroma value or a colour value of the red, green or blue component of a (R, G, B) format.

A pixel value of a displaying surface may be represented by one sample for monochrome image and by multiple co-located samples for color image. Co-located samples associated with a pixel means samples corresponding to the location of a pixel in the display screen.

It is common to consider an image as being a set of pixel values, each pixel being represented by at least one sample.

At least one of the aspects generally relates to signaling in a binary data structure metadata representing invalid depth samples of at least one depth image.

In the following, exemplary embodiments of the present disclosure are discussed by considering a depth image as being either a still image or a video frame of a video.

One other aspect generally relates to producing/writing and possibly storing those metadata in the binary data structure and reading/accessing those metadata from a binary data structure.

Binary data structures define the syntax for parsing and understanding the structures of binary files and network packets (e.g., RTP packets, QUIC messages). They have a start and an end and typically hold self-contained information. Binary data structures are generally transported and stored as a whole. However, when binary data structures are binary files, they may be further segmented into smaller file units sometimes called segments or chunks for the purpose of transmission over a network such as using HTTP-based transport. Popular standards for HTTP-based streaming are Apple HTTP Live Streaming (IETF Internet draft) and MPEG-DASH (Dynamic Adaptive Streaming over HTTP, ISO/IEC 23009-1).

In the following, exemplary embodiments of the present disclosure are described by considering signaling invalid depth samples.

For example, the invalid depth samples may be signaled into a binary file (binary data structure), called ISOBMFF file as defined in the standard ISO/IEC 14496-12. But other file instantiation may be used without any limit of the scope of the present disclosure. Basically, ISOBMFF defines boxes to organize the data in a binary form. A file is then composed of a series of boxes. Each box has a type coded on 4 bytes and a size. The content of each box is then specified by either the ISOBMFF specification or by one of its derivative specifications.

When transmitting media data, a real-time protocol may also be chosen in order to meet the requirements of a targeted application. This is the case for instance for video conversational applications. In this case, binary files comprising metadata representing invalid depth samples are typically encapsulated into transport packets. For example, Real-time Transport Protocol (RTP) (RFC 3550) could be used, i.e. the invalid depth samples may then be signaled into RTP packets (binary data structure). But other transport packet encapsulation may be used without any limit of the scope of the present disclosure.

Exemplary embodiments of a transport packet encapsulation could also be deduced from the following described exemplary embodiments of a file encapsulation by considering a transport standard as instantiation of a transport packet encapsulation rather than the described file encapsulation.

The at least one exemplary embodiment may apply to pre-existing or future-developed, and extensions of standards and recommendations. Unless indicated otherwise, or technically precluded, the aspects described in the present disclosure may be used individually or in combination.

Using depth information instead of texture information to fulfil tasks implemented by an application comes with certain advantages. Firstly, depth measurements do not depend on the illumination of the scene, except if colour cameras are used to recover depth (e.g., stereo vision methods). Depth cameras can work in dark or dim lighting conditions, while also they are not affected by scene illumination changes. Secondly, depth images carry less amount of data to be processed, stored or transmitted, as they typically comprise of lower-resolution images consisting of 1 channel with up to 16-bit values. Texture (colour) images require larger amounts of data, while there are tasks for which the texture information is redundant, such as Augmented Reality (AR) anchoring or robot/unmanned vehicle navigation. Therefore, using only depth data may lead to higher robustness due to their invariance to the scene's appearance, and less computational costs due to the lower amount of resources they require.

Depth information may be used by an object detection method to detect object. Object detection is a computer technology for the automatic identification of objects that belong to a certain class (e.g., humans, animals, cars, buildings). Object detection is important in a number of applications, such as pedestrian detection, facial detection, and object localization.

Depth information may be used to perform human pose estimation. Pose estimation is a computer technology for detecting the position and orientation of a person or an object in texture or depth images. Pose estimation is important in a number of applications, such as surveillance, interactive gaming, and fitness.

Depth information may also be used in deep learning-based methods to infer a 6 degrees of freedom (DoF) pose of objects from depth images.

Depth information may also be used in scene (or 3D) reconstruction. Scene reconstruction is important in a number of applications, such as eXtended Reality (XR) experiences, robotic mapping, and spatial computing. Depth images may be used for scene reconstruction.

Other applications such as object tracking, object recognition, depth-image based rendering, and remote rendering may also use depth information.

Depth sensing technologies are becoming increasingly relevant in modern imaging systems. Depth data denote distances of unobstructed rays between fragments of an object and a given point of origin, as measured along a certain direction. If a fragment of an object is occluded along a ray, its depth data cannot be measured. Depth data convey the topological information of a scene as captured from a specific viewpoint, and as a result, obstructions and occlusions of the scene may be inferred. Depth data can be of great value for the analysis of 3D scenes, assisting in XR applications, computer vision tasks, robotic systems, and automation. Depth data consists of a collection of values, each indicating the distance of a point in the scene from a depth camera i.e. from the depth camera center defined as a default origin point used as reference for capturing a depth image or from the depth camera plane defined as the default origin plane used as reference for capturing a depth image. A depth image comprises samples each associated with a depth value representing a distance relative to the depth camera. Sometime, the term 'depth map' is used to indicate a depth image associated with another image according to a known spatio-temporal relationship.

The present disclosure uses the term depth image but the terms depth map, disparity image or disparity map may be equivalently used.

There are numerous methods to acquire depth data using either physical or virtual cameras. The most mature depth acquisition technologies employed nowadays in commercial devices are stereo vision, motion stereo, structured light, ToF, and Light Detection And Ranging (LiDAR). Each technology has its working principle, with some retrieving directly depth information (e.g., ToF and LiDAR), while others estimating it based on texture images (e.g., stereo vision, motion stereo and structured light). The former compute the depth based on the speed of light and, specifically, the time difference (or phase shift) between its emission and detection. The latter rely on establishing correspondences and performing triangulation. Data-driven solutions using Artificial Intelligence (Al) have become a notable alternative in recent years, gaining momentum. They are designed to perform tasks related to the inference, completion or generation of depth information, often relying on some type of input information (depth or texture).

Colour cameras i.e. camera configured to capture colour images, may be used to measure depth data (e.g., stereo vision acquisition methods), or may accompany depth cameras. Consequently, depth data is often carried alongside the colour information of a scene by using the format RGBD.

Acquired depth data are typically represented as samples of intensity values of a 2D grayscale image. The sample locations of this 2D image correspond to discrete points in the captured 3D space, while the intensity values correspond to depth values as measured from the depth camera's viewpoint (e.g., in meters).

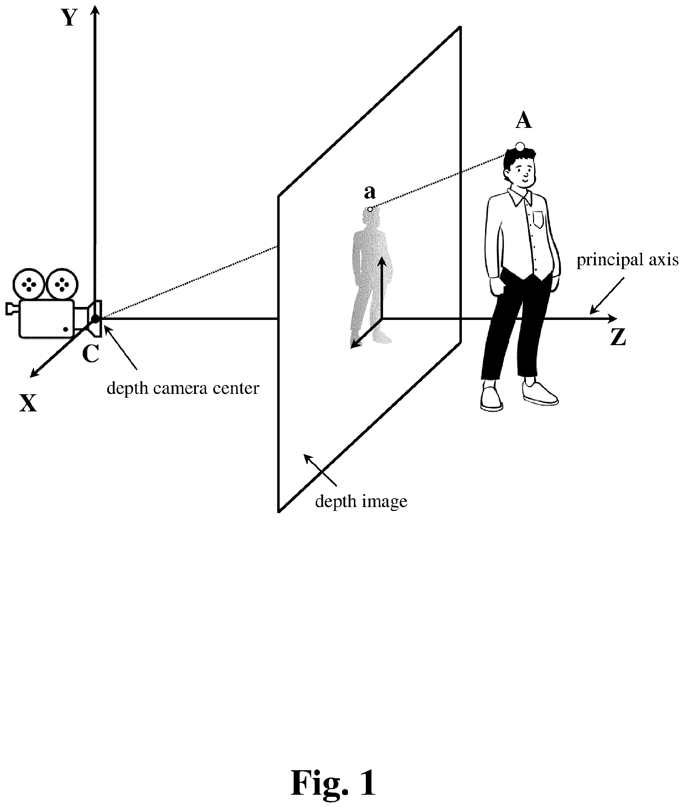

**Figure 1** shows schematically an example of depth value associating with a 3D point of a scene, assuming an ideal pinhole camera model. In this example, given a point **A** on the observed real-world geometry and a corresponding sample **a** in the depth image, the value at a is set equal to the length of **CA** projected onto the principal axis **Z,** or equivalently the z-coordinate of **A** relative to the depth camera origin **C.** There are other distances that can be used to set the value of **a,** such as the Euclidean distance of **CA.** Yet, most commonly, the z-coordinate convention is used.

Typically, a depth image is encoded as a grayscale image with the white colour indicating that a point is nearby and black that is far away (or out of range).

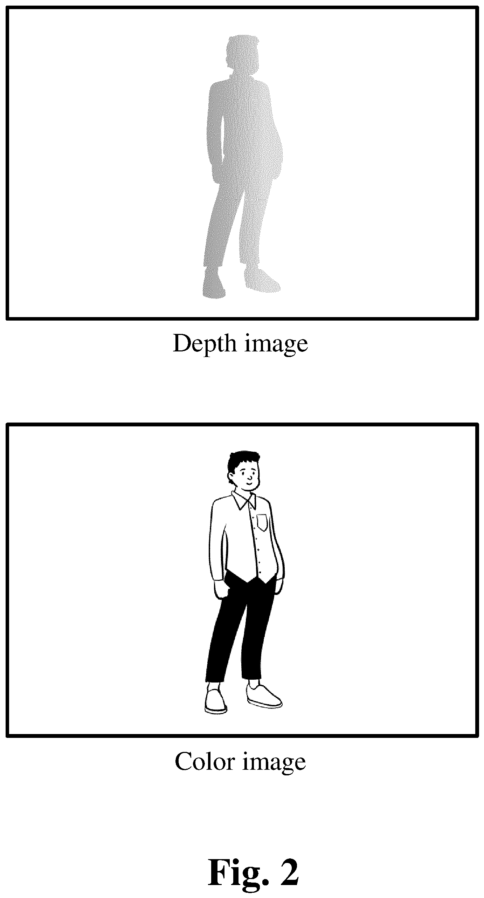

**Figure 2** shows an example of a depth image and a colour image depicting the same model.

Even though the aforementioned is the common practice, the depth information might alternatively be encoded in a non-grayscale image (e.g., with a different colour indicating a semantically different object and the brightness indicating the actual distance), or a completely different format consisting of series/arrays of XYZ coordinates, for example. Compression is required in order to decrease data size requirements for storage and transmission. Existing encoding methods for depth data exploit its specific characteristics, such as the presence of smooth areas (e.g., foreground objects) and sharp discontinuities (e.g., occlusions), which are determined by some type of scene decomposition (e.g., object boundaries detection) followed by encoding of corresponding regions. There are other methods employing generic compression principles, thus, without making any particular assumptions about the nature/distribution of the depth data. Alternative methods propose color space transformations in order to exploit existing image/video infrastructure, while others introduce new modules to extend existing image/video coding architectures.

A depth image typically corresponds to depth data captured at a specific time instance. If consecutive depth data are obtained over time, they are typically arranged in the form of a depth video. The spatial resolution (i.e., the number of samples) of depth images depends on the depth camera's specification. The captured depth values are commonly floating-point numbers and are often quantized to limit storage requirements and to adapt to binary format constraints. Different depth cameras make use of different bit-depths in a trade-off between data size and data precision, with 16-bit unsigned integer representations being the most popular.

The process of sensing depth in a real scene is also known as range imaging (Wikipedia contributors, "Range imaging," Wikipedia, The Free Encyclopedia, https://en.wikipedia.org/w/index.php?title=Range_imaging&oldid=1050828429 (accessed 01/12/2023). Range imaging is the name for a collection of techniques that are used to produce a 2D image showing the distance to points in a scene from a specific point, normally associated with some type of sensor device. The resulting range image has pixel values that correspond to the distance. If the sensor that is used to produce the range image is properly calibrated the pixel values can be given directly in physical units, such as meters.

Depth data can be obtained in a variety of ways, using either physical or virtual depth cameras, or even generated using Al models. Existing methods can be classified based on the nature of sensors they rely upon, as passive and active.

Passive methods do not interfere with the scene; they are non-intrusive techniques based on recorded information in the form of 2D images that depict reflected light from the scene.

Active methods interfere with the scene; they are intrusive techniques based on the received energy after the emission of properly formatted light or any other form of electromagnetic energy.

Passive and active methods are not mutually exclusive. In fact, they can be used together to complement each other and lead to denser or more accurate depth measurements, at the expense of more complex designs and expensive equipment.

Hereafter, we refer to depth image generation methods as obtained from physical sensors, or computer-based techniques. Both can accommodate either passive or active methods, with computer-based techniques relying on simulations.

There are different sensors and techniques to generate depth images from sensed environment. Among the most popular are the (passive/active) stereo vision motion stereo (Nevatia, R., 1976. Depth measurement by motion stereo. Computer Graphics and Image Processing, 5(2), pp.203-214), structured light (J. Geng, "Structured-light 3D surface imaging: a tutorial," Advances in Optics and Photonics, 3, pp. 128-160, 2011), ToF (A. Kolb, E. Barth, R. Koch and R. Larsen, "Time-of-Flight Cameras in Computer Graphics," Computer Graphics Forum, 29(1), pp. 141-159, 2010), and LiDAR (M.C. Amann, T.M. Bosch, M. Lescure, R. A. Myllylae, M. and Rioux, "Laser ranging: a critical review of unusual techniques for distance measurement," Optical engineering, 40, pp.10-19, 2001).

Each method comes with its own advantages and disadvantages in terms of accuracy, resolution, complexity, cost, as well as sensitivity to environmental conditions and scene characteristics, among others.

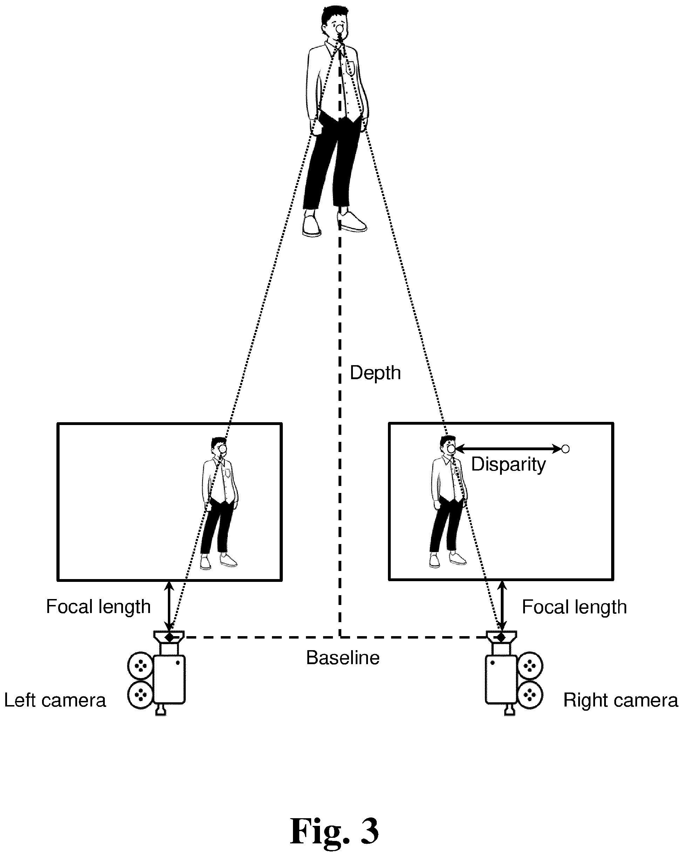

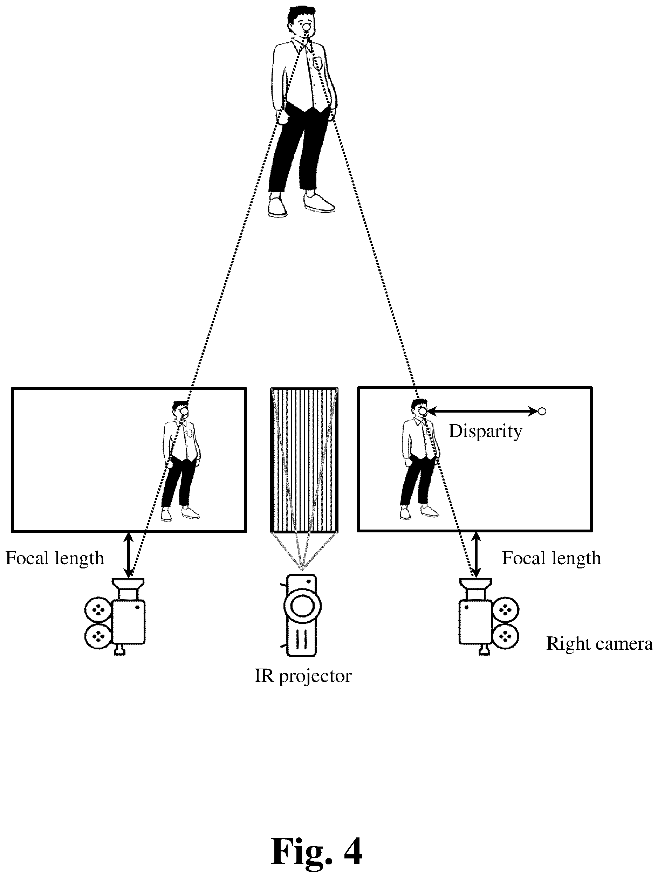

Both passive and active stereo vision methods rely on the acquisition of images from at least two viewpoints, resembling the operation of the human visual system. Concretely, feature points are identified in the captured images and matched, thus, establishing correspondences. Triangulation is then applied in order to estimate disparity values, that reflect the amount of shift of pixels from one image to the other, and then can be easily converted to depth measurements. In active stereo methods, an IR projector and possibly an IR sensor are additionally included to overcome inabilities of passive stereo methods, e.g. to identify features in textureless surfaces (e.g., walls) or in low-light environments. Motion stereo rely on the same principles to estimate depth (e.g., correspondence and triangulation), with the main difference of capturing images using the same moving camera from different viewpoints over time. **Figure 3** shows schematically the principles of a passive stereo vision method using a left and a right cameras and **Figure 4** shows schematically the principles of an active stereo vision method using a left and a right cameras.

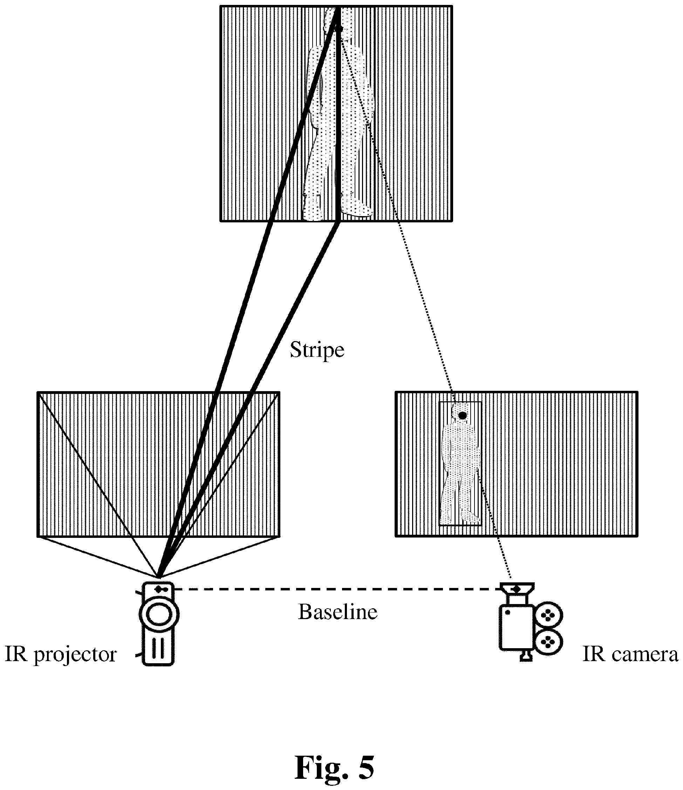

In structured light methods, as shown in **Figure 5****,** a known pattern is emitted by a projector, a camera captures the scene with the projected pattern, and the depth is computed based on the deformations of this known pattern using triangulation.

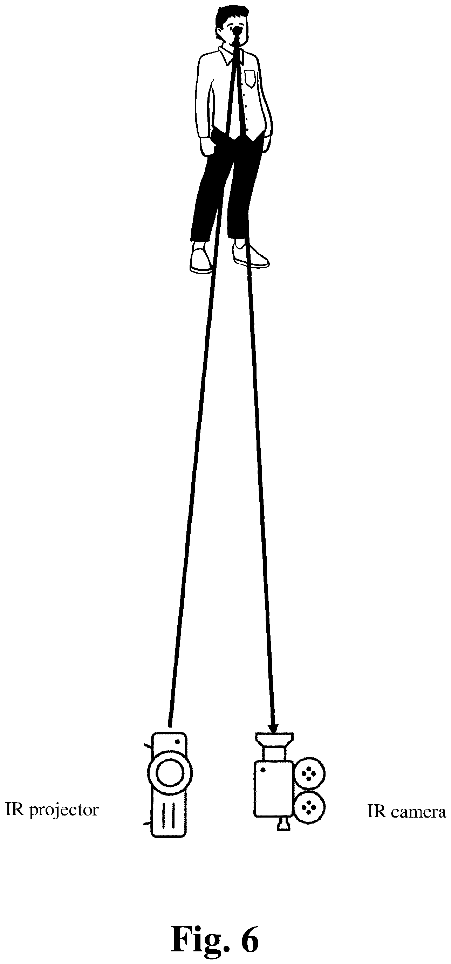

In ToF methods, non-visible short light pulses or light waves are emitted by a projector and detected by a camera, with the depth calculated based on the time difference or the phase shift between emitted and detected light. LiDAR sensors follow the same working principle; however, they make use of laser beams and typically focus on larger depth ranges. **Figure 6** shows an example of depth sensor using the ToF method in which IR ray is projected to the scene and an IR camera captured the reflected ray.

Several depth sensors exist in the prior art. For example, the Microsoft^{®} Azure Kinect^{™} that implements the Amplitude Modulated Continuous Wave (AMCW) ToF principle. The camera casts modulated illumination in the near-IR (NIR) spectrum onto the scene. It then records an indirect measurement of the time it takes the light to travel from the camera to the scene and back (Azure Kinect DK depth camera, https://learn.microsoft.com/en-us/azure/kinect-dk/depth-camera (accessed 01/12/2023).

As another example, the Intel^{®} RealSense^{™} using the (active) stereo vision method (Intel RealSense D400 Series Product Family Datasheet, https://dev.intelrealsense.com/docs/intel-realsense-d400-series-product-family-datasheet). The Intel^{®} RealSense^{™} D400 series depth camera uses stereo vision to calculate depth. The stereo vision implementation consists of a left imager, right imager, and an optional IR projector. The IR projector projects a non-visible static IR pattern to improve depth accuracy in scenes with low texture. The left and right imagers capture the scene and send imager data to the depth imaging (vision) processor, which calculates depth values for each pixel in the image by correlating points on the left image to the right image and via the shift between a point on the left image and the right image. The depth pixel values are processed to generate a depth frame. Sequential depth frames create a depth video stream.

As another example, the ZED depth camera that reproduces the way human binocular vision works. Human eyes are horizontally separated by about 65 mm on average. Thus, each eye has a slightly different view of the world around. By comparing these two views, our brain can infer not only depth but also 3D motion in space (Stereolabs Depth Sensing Overview, https://www.stereolabs.com/docs/depth-sensing/).

Likewise, Stereolabs' stereo cameras have two eyes separated by 6 to 12 cm allowing them to capture high-resolution 3D video of the scene and estimate depth and motion by comparing the displacement of pixels between the left and right images.

It is also fairly straightforward to obtain a depth image from a virtual scene, since the environment is fully known and under the control of a 3D rendering engine. Therefore, any physical depth sensor can be simulated by a virtual one, or other techniques that haven't been employed in physical devices may be implemented.

Embodiments of the present invention relate to invalid depth samples.

Invalid depth samples are defined as the samples of a depth image with missing, unknown or undefined depth value (measurement).

Typically, invalid samples are perceived as "holes" in a depth image.

The presence of invalid depth samples in a depth image depends on the acquisition technology, the properties of the captured scene space, and how do these interact with each other. Properties of the scene space include topological complexity (e.g., size of objects, arrangement of objects, geometrical complexity of objects, occlusions), lighting conditions (e.g., light type, light direction, luminance levels), surface material properties (e.g., reflectance, transparency), and scene motion (e.g., moving objects, speed), among others.

Invalid depth samples may be outlined for several causes.

For example, when stereo vision methods are used for capturing depth data based on data captured from two cameras, invalid depth samples are caused when occluded regions might be seen only from one viewpoint (from one camera). Thus, depth values for these regions cannot be measured based on data captured from the two cameras.

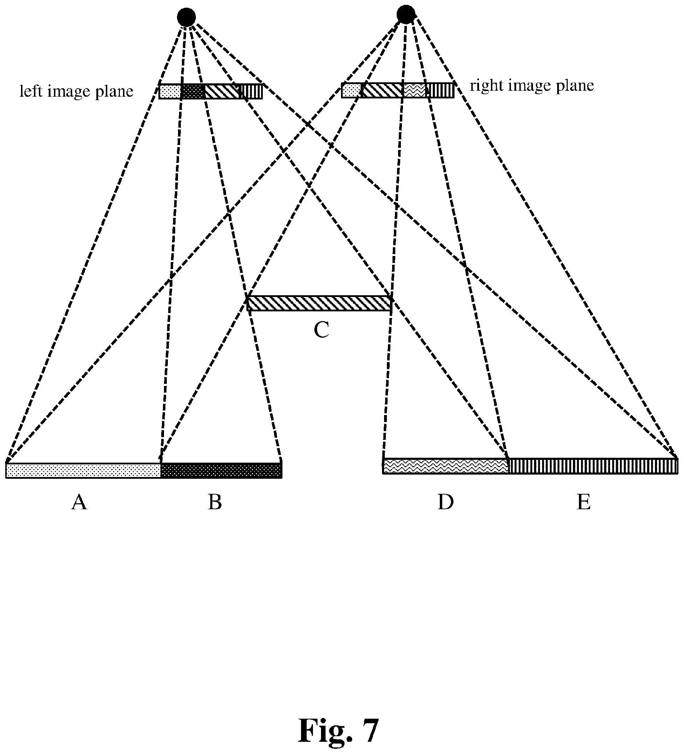

**Figure 7** shows an example of occluded regions in stereo vision (Eletriby, Sherif. (2008). 3-D surface reconstruction using spatial frequency-based approaches under influence of perspective distortion).

In the example, only the regions A, B, C and E are visible in the left image plane, whereas in the right image, the A, C, D and E. Therefore, depth values for regions B and D cannot be obtained from the left and right image.

In another example, invalid depth samples might be obtained due to absence of camera overlap.

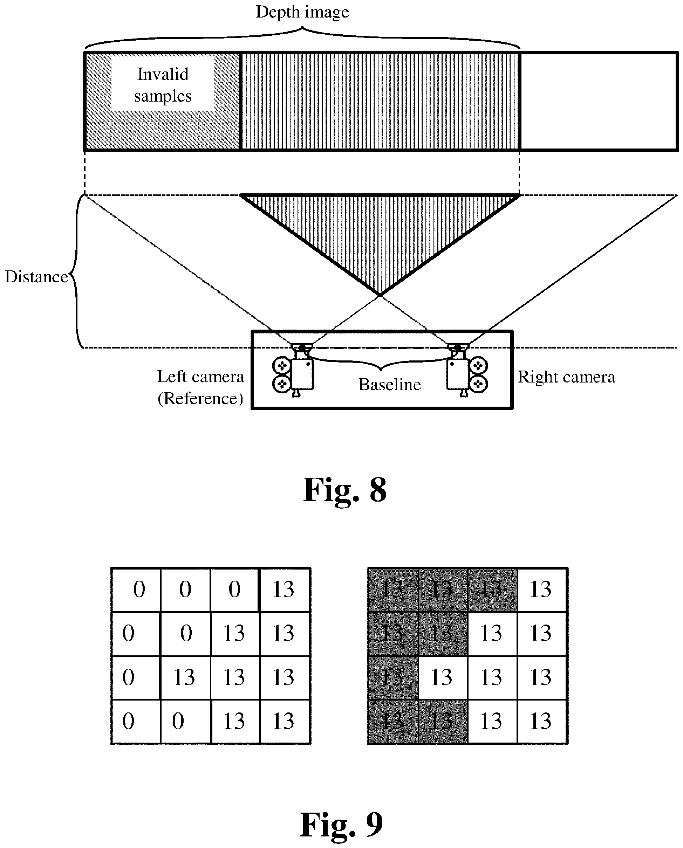

For instance, a depth sensor may be equipped with two identical colour cameras that are displaced by a certain distance (i.e., baseline). Therefore, there is always a part of the scene that falls in the field-of-view of one colour camera and not in the other, as illustrated in **Figure 8****.** In this case, the left colour camera is used as the reference, hence, the invalid depth samples are located at the left side of the output depth image, which is usually referred to as the "invalid depth band". The width of this invalid depth band can be estimated by equation, assuming a base configuration of the depth camera; that is, under different settings, the result of this equation doesn't reflect the actual width of the "invalid depth band".

Another possible implementations could use the right colour camera or both colour cameras as reference. The invalid depth band is then respectively in the right image or shared between the left and right images.

Other causes for invalid depth samples using stereo vision methods include depth discontinuities, textureless surfaces, lighting conditions, and radiometric distortions (noise in captured images preventing identification of correspondences, etc.), among others.

Considering ToF methods, depending on the topology of the captured scene, the emitted light might get too scattered. For example a depth sensor may make use of a projector that casts modulated illumination in the IR spectrum onto the scene, and it records an indirect measurement of the time it takes the light to travel from the depth sensor to the scene and back, with the depth values being proportional to the amount of returned light. However, the received signal might become too weak for generating depth measurements due to scattering or distant obstructions, leading to invalid depth samples.

In another example, bright illumination might lead to saturated IR signal, in which case the phase information is lost, and the depth sensor is unable to obtain depth measurements.

In another example, invalid depth samples might be obtained because certain regions of the scene are not accessible by a projected IR light due to the topology of the scene, or the projection mechanism of the depth sensor. For instance, a depth sensor can use two projection modes, one for narrow field-of-view and the other for wide field-of-view, by activating corresponding IR masks. Samples of the depth image that correspond to regions of the scene that fall outside of the IR mask cannot be measured, leading to invalid depth samples.

Other reasons for invalid depth samples in depth images captured by ToF methods may include lighting conditions, external active IR illumination source interference (e.g., due to the presence of other IR projectors), depth discontinuities, fast motion, surface properties (e.g., active light path error caused by reflective surfaces), among others.

Considering structured light methods, invalid depth samples may appear due to occlusions, absence of overlap between projected IR pattern and camera field-of-view, lighting conditions, external active IR illumination source interference (e.g., due to the presence of other IR projectors), fast motion, surface properties (e.g., active light path error caused by reflective surfaces), and erroneous light pattern detection in dynamic scenes, among other reasons.

Depending on the cause, the amount and location of invalid depth samples in a depth image may vary over time. For example, in a stereo vision setup, the invalid depth samples due to non-overlapping field-of-views of the colour cameras are static and located at the corner of a depth image as long as the device configuration remains the same (i.e., position and field-of-view settings of the colour cameras). On the other hand, invalid depth samples due to occlusions are dynamic and unpredictable, depending on the depth camera's motion or the motion in the scene, given an initial spatial arrangement of objects and a pre-determined device configuration.

The principles of the present disclosure are to signal at least one invalid depth sample of at least one depth image. An invalid depth sample information is obtained. The invalid depth sample information represents the at least one invalid depth sample and each invalid depth sample represents a sample in the at least one depth image associated with a missing, undefined or unknown depth value. The invalid depth sample information is signaled in a binary data structure as metadata of the at least one depth image.

Metadata of the at least one depth image indicate the samples of the at least one depth image that are invalid. Applications may then distinguish real depth samples (valid depth values) and invalid depth samples of each depth image avoiding, for example, processing of invalid depth samples.

The present disclosure signal invalid depth samples as metadata of depth image/video instead of inserting new or modifying the existing depth image sample values as in prior art.

The present disclosure avoids all the disadvantages as discussed in the background section because invalid depth samples are represented in metadata of the depth images.

The present disclosure avoids ambiguity between the specific invalid value and a real depth value because all the values of the depth image samples corresponds to real depth values.

The present disclosure allows lossy compression because invalid depth samples are not in the depth images to be lossy compressed.

The present disclosure facilitates update of the invalid depth samples because the depth images do not have to be decoded and re-encoded and it does not need to know the depth camera used to obtain the depth image to know how to identify invalid depth samples it may contain.

The present disclosure allows higher compression efficiency compared to prior art by allowing any values to be used for invalid depth samples, e.g., using values of valid neighboring samples increases redundancy, which leads to higher compression ratios. That is, since the invalid depth samples are signaled as metadata, the actual corresponding values in the depth image are not important.

**Figure 9** shows an example illustrating how the compression efficiency may be improved according to some embodiments.

On the left side, a 4x4 block of a depth image containing invalid samples indicated with the value "0" and valid samples carrying a value of "13" is shown. Based on prior art, this block values may be encoded as is. On the right side, the block may be modified according to some embodiments of the present disclosure after assigning to the invalid samples, neighboring valid sample values, here the value "13". Encoding the modified block is clearly more efficient than encoding the original block on the left.

The present disclosure reduces complexity, since no decoding and re-encoding is required of the depth image in case invalid depth samples should be added or removed.

The present disclosure improves robustness of the invalid depth sample information since it doesn't rely on the depth sample values that could change when the images/videos are encoded and transmitted (e.g., encoding artifacts, and/or transmission error).

The present disclosure improves robustness by allowing the use of irreversible colour space conversions for the compression of depth image. Colour space conversion is a common pre-encoding step, enabling the use of conventional colour codecs.

The present disclosure reduces complexity of the decoding of the depth images/videos by allowing to selectively discard areas in the image/video containing only invalid depth samples and to only decode areas with valid depth samples. This is possible when suitable encoding tools (e.g., use of tiles) that allow partial image decoding are used to encode the image/video.

The present disclosure improves interoperability, as the receiver/application doesn't need to be aware of different conventions used by different depth cameras in order to indicate invalid depth samples in the image domain, since they are explicitly provided in the metadata. The receiver/application doesn't need to spend computational resources to decode the depth image in order to identify which depth samples are invalid per frame.

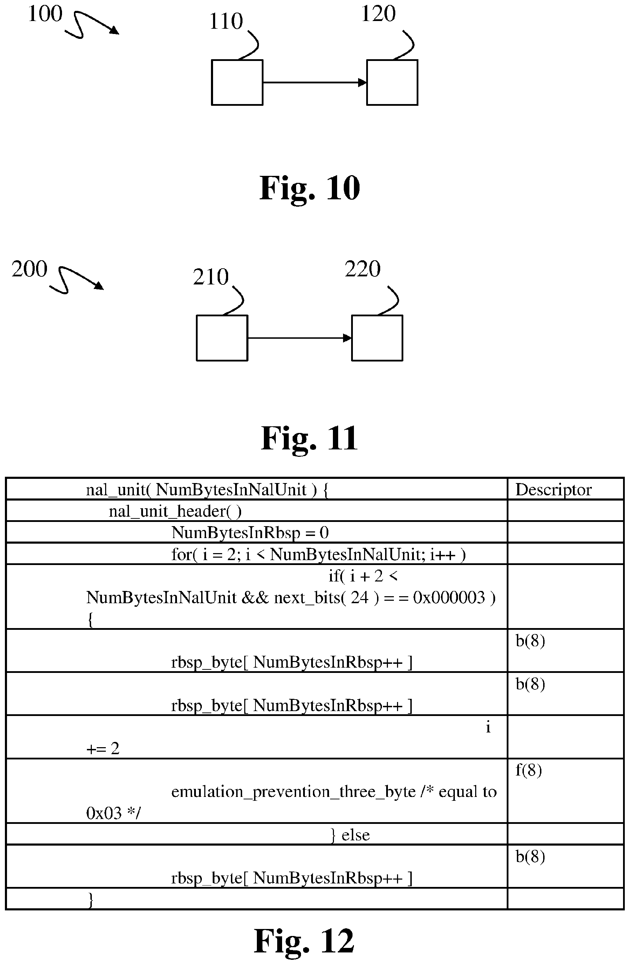

**Figure 10** shows a schematic block diagram of steps of a method of signaling at least one invalid depth sample in at least one depth image in a binary data structure, in some embodiments.

The at least one depth image may be obtained from physical sensors, virtual depth cameras in real or Al (Artificial Intelligence) models in real or simulated environments for example. The at least one depth image may also be obtained from a different depth data representation.

Obtaining the at least one invalid depth sample depends on the representation of the depth information.

Depth information may be represented in different ways, such 2D arrays/matrices, CSV files, point clouds, and voxels, among others. However, the process of obtaining and representing invalid depth samples in some of these cases might not be straightforward. Considering depth images, there is a coordinate system with a pre-determined grid of samples, with each sample corresponding to a point in the 3D scene, obtained after projecting the latter onto a 2D plane. Therefore, it is straightforward to determine invalid depth samples, as the samples of this grid with missing, unknown, or undefined depth measurements, and represent them as bands or masks. For other representations, for example when using CSV files or point clouds that capture (x,y,z) coordinates, it is not straightforward how to determine invalid depth samples, and certain solutions to this problem might be impractical. A possible approach here may be to make use of a pre-determined structure (e.g., 2D array/matrix, (partial) voxel grid) over which the acquired depth measurements are mapped and specify as invalid depth samples the elements of that structure that contain missing, unknown, or undefined depth measurements.

In block 110, an invalid depth sample information representing the at least one invalid depth sample is obtained. Each invalid depth sample representing a sample in the at least one depth image associated with a missing, undefined or unknown depth value.

In block 120, the invalid depth sample information is signaled in a binary data structure file as metadata of the at least one depth image.

For example the invalid depth sample information is signaled in a binary file or in RTP packets.

In some embodiments, the invalid depth sample information may be obtained based on either the entirety or a part of the obtained invalid depth samples depending on capturing setting of the at least one image.

In some embodiments, signaling the invalid depth sample information may comprise transmitting a binary data structure over a communication network, said binary data structure comprising the invalid depth sample information.

For example, the binary data structure may be transmitted either as a stream (after establishing a session) or as a file (potentially in parts).

In some embodiments, the binary data structure further comprises encoded data representing the at least one depth image and/or at least one texture (colour) image associated with the at least one depth image.

**Figure 11** shows a schematic block diagram of steps of an image processing method 200, according to some embodiments.

In block 210, a binary data structure is received. The binary data comprises an invalid depth sample information representing at least one invalid depth sample in at least one depth image, each invalid depth sample representing a sample in the at least one depth image associated with a missing, undefined or unknown depth value.

For example the received binary data structure is a binary file or RTP packets.

In some embodiments, the binary data structure is received from a communication network.

For example, the binary data structure may be received either as a stream (after establishing a session) or as a file (potentially in parts).

In some embodiments, the binary data structure further comprises encoded data representing the at least one depth image and/or at least one texture (colour) image associated with the at least one depth image.

In block 220, at least one invalid depth sample is derived from the invalid depth sample information.

In some embodiments, the invalid depth sample information may indicate a region in the at least one depth image.

In some embodiments, the invalid depth sample information may be defined based on at least one characteristic of the region such as a shape or a center of the region for example.

In some embodiments, the invalid depth sample information may be defined based on horizontal and/or vertical lines in the at least one depth image, delimiting at least one band left, right, above or below the lines.

In some embodiments, the region may be a corner band defined by a side of the at least one depth image and a length of the corner band.

This embodiment is valid when a corner band is located at the left, right, top or bottom sides of a depth image. The invalid depth sample information may then be used to indicate a region of invalid depth samples due to absence of camera overlap, as shown for example in **Figure 8****.**

In some embodiments, the region may be at least one band of invalid depth samples in the at least one depth image defined by orientation, position and width of said at least one band.

In some embodiments, the invalid depth sample information may indicate a binary mask of invalid depth samples in the at least one depth image.

The binary mask may have either the same or different resolution with respect to the depth image.

A binary mask may be obtained either from an automatic or a manual process. The automatic process may be a computer vision task (e.g., image segmentation at pixel level, edge detection). The manual process may be the application of a manually specified threshold for color samples (e.g., above which the user wants to discard) or a manually specified region by the user (e.g., left corner, or a central blob). In both cases, the specified regions may be distinguished from the rest via corresponding binary values of a binary mask.

In a variant, a mask may comprise values expressed on more than one bit: The first bit indicating the invalidity of a sample and the other at least one remaining bit indicating the cause of invalidity (e.g., use 2 bits to indicate whether the depth sample is "missing", "undefined", "unknown", "ambiguous", etc.). The mask becomes then integer mask according to this variant.

In some embodiments, the invalid depth sample information may indicate a shape mask of invalid depth samples in the at least one depth image, said shape mask being expressed as a collection of geometric shapes of invalid depth samples in a depth image.

Similarly to a binary mask, a shape mask may be obtained either from an automatic or a manual process. The automatic process may be a computer vision task (e.g., object detection using bounding boxes). The manual process may be a region manually specified by the user (e.g., a rectangle or a polygon selected using the mouse). In both cases, the specified regions may be distinguished from the rest via a corresponding shape mask.

In some embodiments, the metadata of the at least one depth image representing the invalid depth sample information may be signaled in the video bitstream. The metadata may be signaled up to a frame by frame granularity.

In some embodiments, the metadata of the at least one depth image representing the invalid depth sample information may be signaled as a SEI message.

This embodiment allows to transmit the invalid depth sample information along with a video signal from an encoder (e.g., in a studio, on a server) up to a receiver (e.g., a TV receiver, a smartphone, a tablet, a Head-Mounted Display (HMD), a pair of smart-glasses, etc.).

Generally speaking, SEI messages are metadata carried in a video bitstream. Those metadata may support the decoding of the video or may be useful for some processing after decoding. Each SEI type defines a syntax of a payload as well as a semantic of the data so that an implementer can make use of the signaled SEI if they want to support it.

Signaling a SEI message in video bitstream may be based on NAL unit as defined in video codec standards such as H.264/AVC (ISO/IEC 14496-10 "Information technology - Coding of audio-visual objects - Part 10: Advanced Video Coding (AVC)", https://www.iso.org/standard/83529.html), H.265/HEVC (ISO/IEC 23008-2:2023 "Information technology - High efficiency coding and media delivery in heterogeneous environments - Part 2: High efficiency video coding (HEVC)", https://www.iso.org/standard/85457.html), EVC (ISO/IEC 23094-1:2020, "Information technology - General video coding - Part 1: Essential video coding (EVC)", https://www.iso.org/standard/57797.html) and H.266/VVC (ISO/IEC 23090-3:2022 "Information technology - Coded representation of immersive media - Part 3: Versatile video coding (VVC)", https://www.iso.org/standard/83531.html). But similar signaling may be achieved for other coding standards such as AV1 (AV1 Bitstream & Decoding Process Specification, http://aomedia.org/av1/specification/) or the upcoming AV2 standard.

A NAL unit is an encapsulation method for a video bitstream. A NAL unit is composed of a header and a payload. The concept of NAL unit is identical for those 4 standards although the definition of the NAL header may vary slightly between H.264/AVC, H.265/HEVC, MPEG-5 EVC and H.266/VVC.

In the following, the signaling will take the VVC standard as a basis for illustration purposes. Similar embodiments can be drafted for H.264/AVC, H.265/HEVC, or MPEG-5 EVC.

**Figure 12** shows the general syntax of a NAL unit as defined in H.266/VVC. The formatting of Table 1 follows the conventions defined in H.266/VVC. For further details, the reader may refer to section 7.1 "Method of specifying syntax in tabular form", section 7.2 "Specification of syntax functions and descriptors" in H.266/VVC, and section D.2.1 General SEI payload syntax.

A particular payload type may be assigned for signaling the SEI message carrying the metadata of the at least one depth image representing the invalid depth sample information.

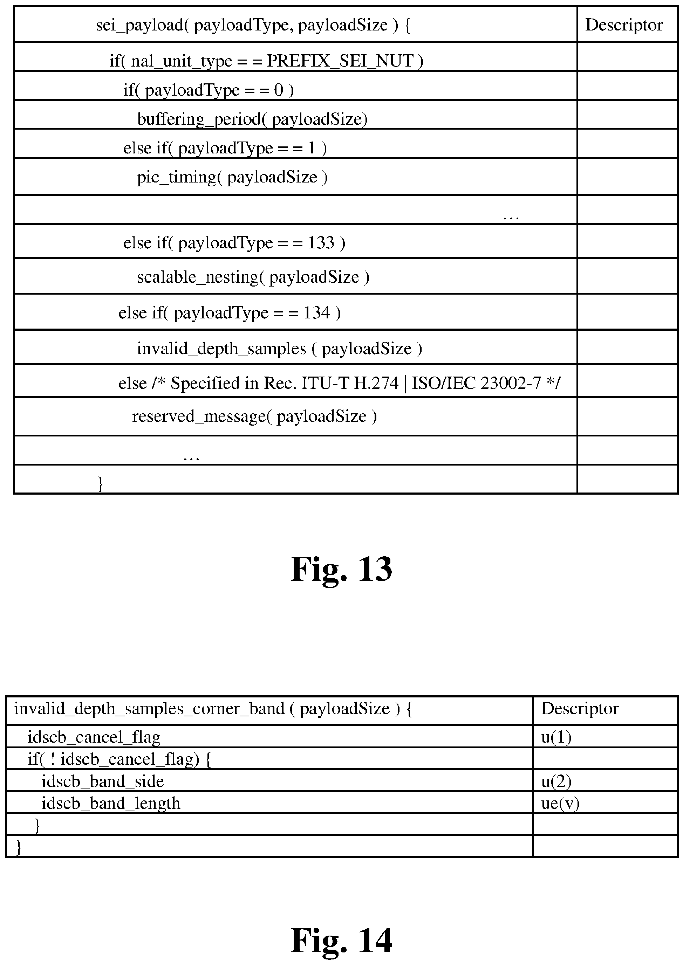

**Figure 13** shows an example of a particular payload type '134' assigned for signaling the invalid depth sample information according to some embodiments. The syntax element **invalid_depth_samples** ( payloadSize ) indicates a payload of a SEI message carrying the invalid depth sample information and the term **payloadSize** indicates the size of the invalid depth sample information.

**Figure 14** shows an example of **invalid_depth_samples_corner_band** ( payloadSize ) SEI message carrying the invalid depth sample information indicating a corner band in the at least one depth image according to some embodiments.

The syntax element **idscb_cancel_flag** equal to 1 indicates that the SEI message cancels the persistence of any previous **invalid_depth_samples_corner_band** SEI message. When equal to 0, the information that should be considered follows.

The syntax element **idscb_band_side** specifies the side of the depth image (video) in which the corner band of invalid depth samples is located. When **idscb_band_side** is equal to 0, the corner band is located at the left side of the depth image. Analogously, when **idscb_band_side** is equal to 1, 2, and 3, the corner band is located at the top, right and bottom side, respectively.

The syntax element **idscb_band_length** specifies the width of the corner band in a cropped decoded picture. When **idscb_band_side** is equal to 0 or 2, the **idscb_band_length** indicates the width, in units of luma samples. When **idscb_band_side** is equal to 1 or 3, the **idscb_band_length** indicates the height, in units of luma samples.

In a variant, instead of using an absolute number for the length of the band, a relative number with respect to the resolution of the cropped decoded picture can be used instead.

The term "cropped decoded picture" refers to the output of the Hypothetical Reference Decoder (HRD) buffer model specified in AVC/HEVC/VVC. Basically, the cropped decoded picture is obtained by cropping a reference picture from the Decoded Picture Buffer (DPB) specified in AVC/HEVC/VVC

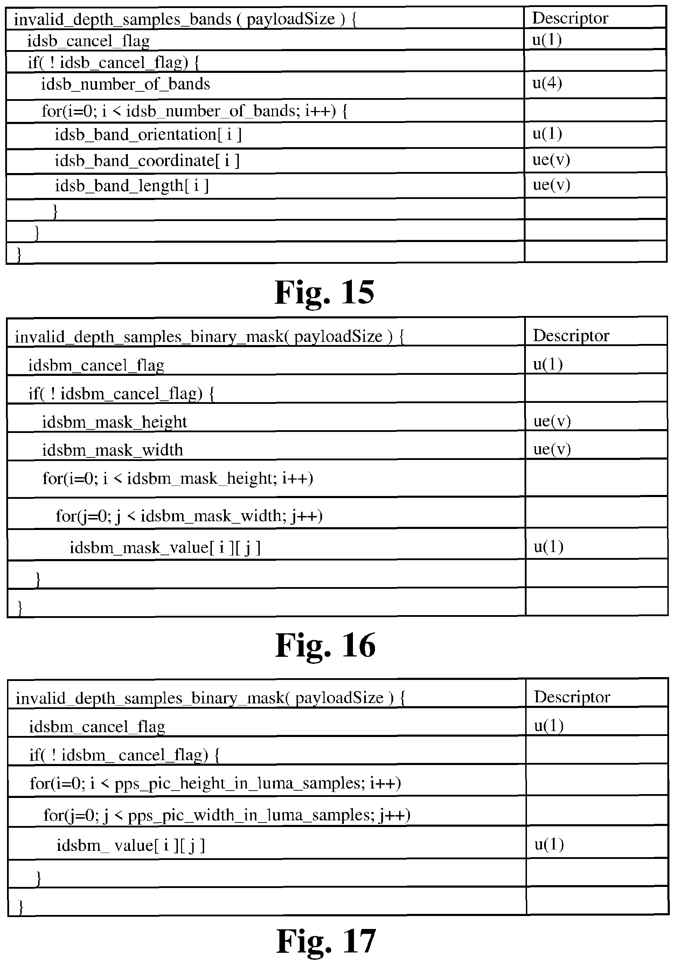

**Figure 15** shows an example of **invalid_depth_samples_bands** ( payloadSize ) SEI message carrying the invalid depth sample information indicating at least one band in the at least one depth image, according to some embodiments.

The syntax element **idsb_cancel_flag** equal to 1 indicates that the SEI message cancels the persistence of any previous **invalid_depth_samples_bands** SEI message. When equal to 0, the information that should be considered follows.

The syntax element **idsb_number_of_bands** indicates the number of bands of invalid depth samples.

The syntax element **idsb_band_orientation[ i** ] specifies the orientation of the i-th band. When the **idsb_band_orientation[ i** ] is equal to 0, the signaled band is vertical. When the **idsb_band_orientation** [ **i** ] is equal to 1, the band is horizontal.

The syntax element **idsb_band_coordinate**[ **i** ] specifies the coordinate of the start of the i-th band. When the **idsb_band_orientation[ i** ] is equal to 0, the **idsb_band_coordinate**[ **i** ] refers to a vertical coordinate (i.e., column) in the cropped decoded picture. When the **idsb_band_orientation[ i** ] is equal to 1, the **idsb_band_coordinate**[ **i** ] refers to a horizontal coordinate (i.e., row) in the cropped decoded picture.

The syntax element **idsb_band_length**[ **i** ] specifies the length of the i-th band. When the **idsb_band_orientation[ i** ] is equal to 0, the signaled band starts from the vertical coordinate **idsb_band_coordinate**[ **i** ] and has a width, in units of luma samples, equal to **idsb_band_length**[ **i** ]. When the **idsb_band_orientation[ i** ] is equal to 1, the band starts from the horizontal coordinate **idsb_band_coordinate**[ **i** ] and has a height, in units of luma samples, equal to **idsb_band_length**[ **i** ].

In a variant, instead of using an absolute number for the coordinate and the length of the bands, relative numbers with respect to the resolution of the cropped decoded picture can be used instead.

**Figure 16** shows an example of **invalid depth samples binary_mask** ( payloadSize ) SEI message carrying the invalid depth sample information indicating a binary mask of invalid depth samples in the at least one depth image, according to some embodiments.

In this example, resolutions of the depth image and binary mask are different and, hence, the width and height parameters are specified. A rescaling operation may then be needed, and possibly corresponding signaling to indicate how this rescaling operation is performed, such that the rescaled binary mask resolution matches the resolution of the depth image.

The **irivalid_depth_samples_binary**_**mask** SEI message carries parameters that describe the invalid set of samples in the depth video.

The syntax element **idsbm_cancel_flag** equal to 1 indicates that the SEI message cancels the persistence of any previous **invalid depth samples binary_mask** SEI message. When equal to 0, the information that should be considered follows.

The syntax element **idsbm_mask_height** specifies the height of the binary mask.

The syntax element **idsbm_mask_width** specifies the width of the binary mask.

The syntax element **idsbm_mask_value**[ i ][ j ] specifies a sample of the binary mask that indicates the invalidity of the co-located sample in the depth image. When the syntax element **idsbm_mask_value**[ i ][ j ] is equal to 1, the co-located depth sample is invalid. When the syntax element **idsbm_mask_value** [ i ][ j ] is equal to 0, the co-located depth sample is valid.

A more efficient syntax to encode the invalidity information could be employed (e.g., Run-Length Encoding compression).

**Figure 17** shows an example of **invalid depth samples binary_mask** ( payloadSize ) SEI message carrying the invalid depth sample information indicating a binary mask of invalid depth samples in the at least one depth image, according to some embodiments.

In this example, the binary mask and the depth image have the same resolution (width and height) i.e. the parameter **pps_pic_height_in_luma_samples,** that specifies the maximum height, in units of luma samples, of each decoded picture referring to the Sequence Parameter Set (SPS), equals **idsbm_mask_height** and the parameter **pps_pic_width_in_luma_samples** that specifies the maximum width, in units of luma samples, of each decoded picture referring to the SPS, equals **idsbm_mask_width.** No need to specify them in the **invalid depth samples binary_mask** SEI message.

In some embodiments, a sequence of at least one integer (or binary) mask may be obtained, each integer (or binary) mask corresponding to the at least one depth image. The sequence of the at least one depth image may be signaled as a sequence of primary pictures constituting a primary picture layer, and the sequence of integer (or binary) masks may be signaled as a sequence of invalid depth sample auxiliary pictures constituting an auxiliary picture layer. The sequence of integer (or binary) masks may contain a SEI message or Video Parameter Set (VPS) to indicate that the type of auxiliary picture layer is invalid depth sample information. The binary mask is a particular case of the integer mask (each value equals either 0 or 1).

This means that each invalid depth sample auxiliary picture layer may be associated with one primary picture layer and one primary picture layer may be associated with one or more invalid depth sample auxiliary picture layers.

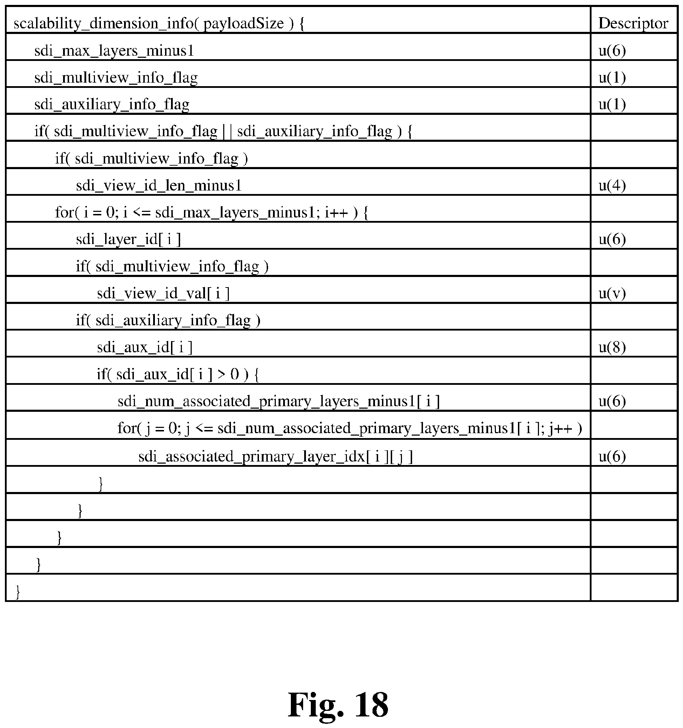

**Figure 18** shows an example of **scalability_dimension_info** ( payloadSize ) SEI message carrying the invalid depth sample information as auxiliary picture layer, according to some embodiments.

This embodiment presents the modifications of the **scalability_dimension_info** SEI as specified in the Versatile Supplemental Enhancement Information (VSEI, ISO/IEC 23002-7:2022 "Information technology - MPEG video technologies - Part 7: Versatile supplemental enhancement information messages for coded video bitstreams", https://www.iso.org/standard/83530.html) and referenced in VVC.

In a variant, VSEI as specified in HEVC may also be modified in a similar manner.

Note that a similar extension in the scalable HEVC can be achieved.

The syntax element **sdi_aux_id**[ i ] equal to 0 indicates that the i-th layer in the current CVS (Coded Video Sequence) does not contain auxiliary pictures. **sdi_aux_id**[ i ] greater than 0 indicates the type of auxiliary pictures in the i-th layer in the current CVS as specified in Table 1. When **sdi_auxiliary_info_flag** is equal to 0, the value of **sdi_aux_id**[ i ] is inferred to be equal to 0.

**Table 1**

| **sdi_aux_id[ i ]** | **Name** | **Type of auxiliary pictures** |
|---|---|---|
| 1 | AUX_ALPHA | Alpha plane |
| 2 | AUX_DEPTH | Depth picture |
| 3 | AUX_INVALID_DEPTH_SA MPLE | Binary mask for invalid depth sample |
| 4..127 | | Reserved |
| 128..159 | | Unspecified |
| 160..255 | | Reserved |

The interpretation of auxiliary pictures associated with **sdi_aux_id**[ i ] in the range of 128 to 159, inclusive, is specified through means other than the **sdi_aux_id**[ i ] value. The value of **sdi_aux_id**[ i ] shall be in the range of 0 to 3, inclusive, or 128 to 159, inclusive, for bitstreams conforming to Table 1. Although the value of **sdi_aux_id**[ i ] shall be in the range of 0 to 3, inclusive, or 128 to 159, inclusive, decoders shall also allow other values of **sdi_aux_id**[ i ] in the range of 0 to 255, inclusive. If the value of **sdi_aux_id**[ i ] is equal to 0, the i-th layer is referred to as a primary picture layer. Otherwise, the i-th layer is referred to as an auxiliary picture layer. When the value of **sdi_aux_id**[ i ] is equal to 1, the i-th layer is referred to as an alpha auxiliary picture layer. When the value of **sdi_aux_id**[ i ] is equal to 2, the i-th layer is also referred to as a depth auxiliary picture layer. When the value **sdi_aux_id**[ i ] is equal to 3, the i-th layer is also referred to as a binary mask for invalid depth sample auxiliary picture layer.

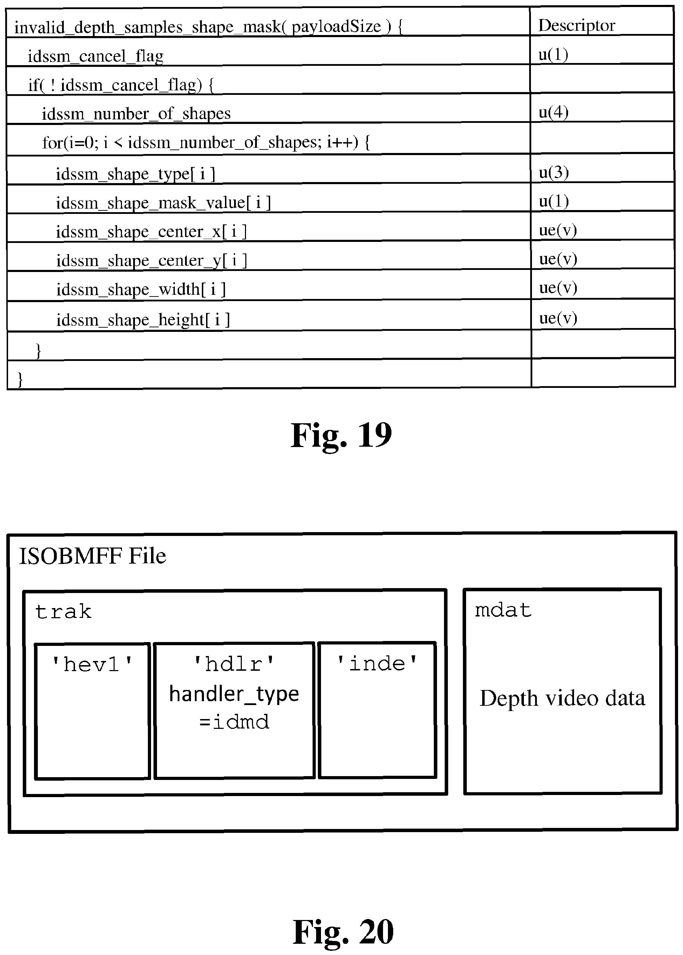

**Figure 19** shows an example of **invalid_depth_samples_shape_mask** ( payloadSize ) SEI message carrying the invalid depth sample information indicating a mask of invalid depth samples in the at least one depth image, according to some embodiments.

In this example, the shape mask and the depth image have the same resolution (width and height).

The syntax element **idssm_cancel_flag** equal to 1 indicates that the SEI message cancels the persistence of any previous **invalid_depth_samples_shape_mask** SEI message. When equal to 0, the information that should be considered follows.

The syntax element **idssm_number_of_shapes** indicates the number of shapes composing the mask.

The syntax element **idssm_shape_type**[ i ] specifies the type of the i-th shape. When equal to 0, the signaled shape is a rectangle. When equal to 1, the shape is an ellipse.

The syntax element **idssm_shape_mask_value**[ i ] specifies the transparency of the i-th shape. When the value of **idssm_shape_mask_value**[ i ] is equal to 1, the depth samples covered by the shape are invalid. When the value of **idssm_shape_mask_value**[ i ] is equal to 0, the depth samples covered by the shape are valid.

The syntax element **idssm_shape_center_x**[ i ], **idssm_shape_center_y**[ i ], **idssm_shape_width**[ i ], **idssm_shape_height**[ i ] specify respectively the horizontal coordinate, the vertical coordinate, the width and height of the i-th shape. The interpretation of width and height depends on the shape type. The depth samples whose position are covered by the i-th shape inherit from the invalidity value of this i-th shape indicated by **idssm_shape_mask_value**[ i ].

In some embodiments, the metadata of the at least one depth image representing the invalid depth sample information may be signaled in a file format.

For the purpose of the invention, invalid depth samples may need to be obtained before accessing the video bitstream. As a result, one may signal the invalid depth sample information in the file container's metadata.

In some embodiments, the file format is based on ISOBMFF formatted file that conforms to the standard ISO/IEC 14496-12 or one of its derivatives.

In a variant, similar metadata may be also signaled in any other file-based (e.g., WebM) or packet-based (e.g., RTP) containers.

The invalid depth sample information may be static or dynamic, i.e. it varies over time. It should be considered that it is up to the process used to generate depth image samples to determine which samples are invalid depth samples and to identify over time if this information is static or dynamic.

In some embodiments, the metadata of the at least one depth image representing the invalid depth sample information may be signaled in the file format as static metadata for the duration of a video track as defined by ISOBMFF.

In some embodiments, static metadata signaling the invalid depth sample information may be carried in a box as defined in ISOBMFF.

**Figure 20** shows an example of a MetaBox carrying static metadata signaling the invalid depth sample information according to some embodiments.

The ISOBMFF formatted file may comprise a MetaBox that is a common base structure as defined in ISOBMFF to contain general untimed metadata, placed at the track level. To this end, a new handler type, namely, 'idmd' (stands for invalid depth metadata) is defined. When present in a MetaBox (with character code 'meta'), this handler type 'idmd' would require the presence of a new box called **InvalidDepthBox** (with character code 'inde').

In some embodiments, the static metadata signaling the invalid depth sample information may indicate a region in the at least one depth image.

In some embodiments, the region may be a corner band defined by a side of at least one depth image and a length of the corner band. The static metadata may then indicate the side and the length of a corner band in the at least one depth image.

One assumes that a corner band may be only located at the left, right, top or bottom sides of a depth image.

An example of syntax of the box **InvalidDepthBox** is given in Table 2 which inherits from the class FullBox defined in ISOBMFF.

**Table 2**

| |
|---|
| aligned(8) class InvalidDepthBox extends FullBox ('inde', 0, 0) { |
| unsigned int(4) band_side; |
| unsigned int(12) band_length; |
| } |

The syntax element **band_side** specifies the side of the depth image (video) in which the corner band of invalid depth samples is located. When **band_side** is equal to 0, the corner band is located at the left side of the depth image. Analogously, when **band_side** is equal to 1, 2, and 3, the corner band is located at the top, right and bottom side, respectively.

The syntax element **band_length** specifies the length of the corner band in a cropped decoded picture. When band_side is equal to 0 or 2, the **band_length** indicates the width, in units of luma samples. When **band_side** is equal to 1 or 3, the **band_length** indicates the height, in units of luma samples.

In some embodiments, the static metadata may indicate at least one band of invalid depth samples in the at least one depth image defined by orientation, position and width of said at least one band.

An example of syntax of the box **InvalidDepthBox** is given in Table 3 which inherits from the class FullBox defined in ISOBMFF.

**Table 3**

| |
|---|
| aligned(8) class InvalidDepthBox extends FullBox ('inde', 0, 0) { |
| unsigned int(4) number_of_bands; |
| unsigned int(4) reserved; |
| for (int i=0; i < number_of_bands; i++) { |
| unsigned int(1) band_orientation[i]; |
| unsigned int(7) reserved; |
| unsigned int(12) band_coordinate[i]; |
| unsigned int(12) band_length[i]; |
| } |
| } |

The syntax element **number_of_bands** indicates the number of bands of invalid depth samples.

The syntax element **band_orientation**[ i ] specifies the orientation of the i-th band. When the **band_orientation**[ i ] is equal to 0, the signaled band is vertical. When the **band_orientation** [ i ] is equal to 1, the band is horizontal.

The syntax element **band_coordinate**[ i ] specifies the coordinate of the start of the i-th band. When the **band_orientation**[ i ] is equal to 0, the **band_coordinate**[ i ] refers to a vertical coordinate (i.e., column) in the cropped decoded picture. When the **band_orientation**[ i ] is equal to 1, the **band_coordinate**[ i ] refers to a horizontal coordinate (i.e., row) in the cropped decoded picture.

The syntax element **band_length**[ i ] specifies the length of the i-th band. When the **band_orientation**[ i ] is equal to 0, the signaled band starts from the vertical coordinate **band_coordinate**[ i ] and has a width, in units of luma samples, equal to **band_length**[ i ]. When the **band_orientation**[ i ] is equal to 1, the band starts from the horizontal coordinate **band_coordinate**[ i ] and has a height, in units of luma samples, equal to **band_length**[ i ].

In a variant, instead of using an absolute number for the coordinate and the length of the bands, relative numbers with respect to the resolution of the cropped decoded picture can be used instead.

In some embodiments, the static metadata may indicate an integer (or binary)mask of invalid depth samples in the at least one depth image.

In this example, resolutions of the depth image and binary mask are different and, hence, the width and height parameters are specified. A rescaling operation may then be needed, and possibly corresponding signaling to indicate how this rescaling operation is performed, such that the rescaled binary mask resolution matches the resolution of the depth image.

An example of syntax of the box **InvalidDepthBox** is given in Table 4 which inherits from the class FullBox defined in ISOBMFF.

**Table 4**

| |
|---|
| aligned(8) class InvalidDepthBox extends FullBox ('inde', 0, 0) { |
| unsigned int(32) mask_width; |
| unsigned int(32) mask_height; |
| for (i=0; i < mask_height; i++) { |
| for (j=0; j < mask_width; j++) { |
| unsigned int(1) mask_value[i][j]; |
| unsigned int(7) reserved; |
| } |
| } |
| } |

The syntax element **mask_height** specifies the height of the binary mask.

The syntax element **mask_width** specifies the width of the binary mask.

The syntax element **mask_value**[ i ][ j ] specifies a sample of the binary mask that indicates the invalidity of the co-located sample in the depth image. When the syntax element **mask_value**[ i ][ j ] is equal to 1, the co-located depth sample is invalid. When the syntax element **mask_value** [ i ][ j ] is equal to 0, the co-located depth sample is valid.

A more efficient bit packing format may be used in order to avoid wasting 7 reserved bits, for every mask value. Specifically, assuming that there is no need for any reserved bit, consecutive mask values of a pre-defined order (e.g., left to right, or top to bottom) can be packed in groups of 8 mask values into bytes with potentially some padding bits at the end (if needed), and can be accessed altogether with a single read operation.

In an alternative example, the binary mask and the depth image have the same resolution (width and height), hence, the metadata in the track header of the video track may have been used in order to retrieve the width and height parameters (i.e., no need to specify them in the Invalid Depth Box).

In some embodiments, the static metadata may indicate a shape mask of invalid depth samples in the at least one depth image.

In this example, the shape mask and the depth image have the same resolution (width and height).

An example of syntax of the box **InvalidDepthBox** is given in Table 5 which inherits from the class FullBox defined in ISOBMFF.

**Table 5**

| |
|---|
| aligned(8) class InvalidDepthBox extends FullBox ('inde', 0, 0) { |
| unsigned int(4) number_of_shapes; |
| for (i=0; i < number_of_shapes; i++) { |
| unsigned int(3) shape_type[i]; |
| unsigned int(1) shape_mask_value[i]; |
| unsigned int(12) shape_center_x[i]; |
| unsigned int(12) shape_center_y[i]; |
| unsigned int(12) shape_width[i]; |
| unsigned int(12) shape_height[i]; |
| } |
| } |

The syntax element **number_of_shapes** indicates the number of shapes composing the mask.

The syntax element **shape_type**[ i ] specifies the type of the i-th shape. When equal to 0, the signaled shape is a rectangle. When equal to 1, the shape is an ellipse.

The syntax element **shape_mask_value**[ i ] specifies the transparency of the i-th shape. When the value of **shape_mask_value**[ i ] is equal to 1, the depth samples covered by the shape are invalid. When the value of **shape_mask_value**[ i ] is equal to 0, the depth samples covered by the shape are valid.

The syntax element **shape_center_x**[ i ], **shape_center_y**[ i ], **shape_width**[ i ], **shape_height**[ i ] specify respectively the horizontal coordinate, the vertical coordinate, the width and height of the i-th shape. The interpretation of width and height depends on the shape type. The depth samples whose position are covered by the i-th shape inherit from the invalidity value of this i-th shape indicated by **shape_mask_value**[ i ].

In some embodiments, the metadata of the at least one depth image representing the invalid depth sample information may be signaled as dynamic metadata in a file format but not inside a video bitstream. The metadata may be signaled up to a frame by frame granularity.

In some embodiments, dynamic metadata signaling the invalid depth sample information may be carried in a timed metadata track as defined in ISOBMFF.

In such case, the timed metadata track contains a sequence of data, with each data point being a sample of the timed metadata track. Tracks can contain only a few samples of the entire duration of the video, or one sample per video frame, or even several samples per video frame.

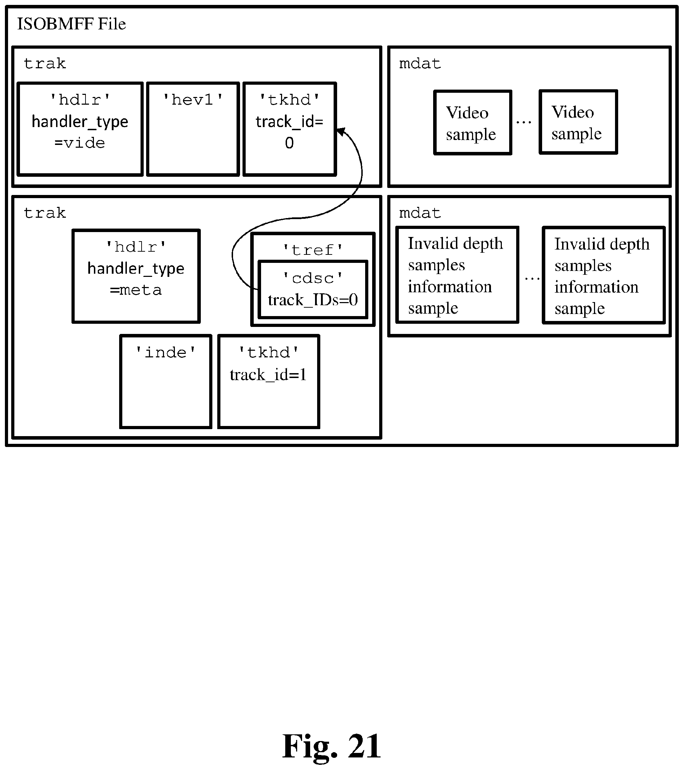

**Figure 21** shows an example of a timed metadata track carrying dynamic metadata signaling the invalid depth sample information according to some embodiments.

In the example, the formatted ISOBMFF formatted file may comprise two tracks, namely, a video track with id=0, and a metadata track with id = 1. The former is identified by the 'vide' handler type, while the latter by the 'meta' handler in the HandlerBox of the MediaBox. In this example, the video track is encoded using the HEVC codec, with the encoding and the track following the constraints defined by the 'hev1' sample entry, as specified in the ISO/IEC 14496-15 standard (ISO/IEC 14496-15 "Information technology - Coding of audio-visual objects - Part 15: Carriage of network abstraction layer (NAL) unit structured video in the ISO base media file format" https://www.iso.org/standard/83336.html). The metadata track (id=1) contains a track reference (with character code 'tref') to the video track (id=0), which is of type 'cdsc', as defined in the ISOBMFF standard (ISO/IEC 14496-12 "Information technology - Coding of audio-visual objects - Part 12: ISO base media file format"). The ISOBMFF standard indicates that metadata tracks refer to the main track using the 'cdsc' reference type, and the meaning is as follows:
- 'cdsc' links a descriptive or metadata track to the content which it describes;
- Timed metadata media uses the 'meta' handler type in the HandlerBox of the MediaBox;
- metadata tracks are linked to the track they describe using a track-reference of type 'cdsc'.

The sample entries specify how to parse the samples carried in the 'mdat'. Since no invalid depth sample information sample type exists yet, the sample entry 'inde' is defined.

The invalid depth sample information samples and video samples are contained in two 'mdat', as shown in **Figure 21****.**

In a variant, the invalid depth sample information samples and video samples may be contained in one 'mdat', and in that case, the samples may be interleaved.

Video and metadata tracks are contained in the same file, as shown in **Figure 21****.**

In a variant, the two tracks may be contained in two separate files.

In some embodiments, the dynamic metadata may indicate a corner band in the at least one depth image.

One assumes that a corner band may be only located at the left, right, top or bottom sides of a depth image.

An example of syntax of a metadata sample entry **InvalidDepthSampleEntry** is given in Table 6 which inherits from the class **MetaDataSampleEntry** defined in ISOBMFF.

**Table 6**

| |
|---|
| class InvalidDepthSampleEntry() extends MetaDataSampleEntry ('inde'){ |
| } |

An example of syntax of the corresponding sample **InvalidDepthSample** may be given in Table 7.

**Table 7**

| |
|---|
| class InvalidDepthSample(){ |
| unsigned int(4) band_side; |
| unsigned int(12) band_length; |
| } |

In some embodiments, the dynamic metadata may indicate at least one band of invalid depth samples in the at least one depth image defined by orientation, position and width of said at least one band.

An example of syntax of the metadata sample entry **InvalidDepthSampleEntry** is given in Table 8 which inherits from the class **MetaDataSampleEntry** defined in ISOBMFF.

**Table 8**

| |
|---|
| class InvalidDepthSampleEntry() extends MetaDataSampleEntry ('inde'){ |
| unsigned int(8) number_of_bands; |
| } |

An example of syntax of the corresponding sample **InvalidDepthSample** may be given in Table 9.

**Table 9**

| |
|---|
| class InvalidDepthSample(){ |
| for (int i=0; i < number_of_bands; i++) { |
| unsigned int(1) band_orientation[i]; |
| unsigned int(12) band_coordinate[i]; |
| unsigned int(12) band_length[i]; |
| unsigned int(7) reserved; |
| } |
| } |

The syntax element **number_of_bands** indicates the number of bands of invalid depth samples.

The syntax element **band_orientation**[ i ] specifies the orientation of the i-th band. When the **band_orientation**[ i ] is equal to 0, the signaled band is vertical. When the **band_orientation** [ i ] is equal to 1, the band is horizontal.

The syntax element **band_coordinate**[ i ] specifies the coordinate of the start of the i-th band. When the **band_orientation**[ i ] is equal to 0, the **band_coordinate**[ i ] refers to a vertical coordinate (i.e., column) in the cropped decoded picture. When the **band_orientation**[ i ] is equal to 1, the **band_coordinate**[ i ] refers to a horizontal coordinate (i.e., row) in the cropped decoded picture.

The syntax element **band_length**[ i ] specifies the length of the i-th band. When the **band_orientation**[ i ] is equal to 0, the signaled band starts from the vertical coordinate **band_coordinate**[ i ] and has a width, in units of luma samples, equal to **band_length**[ i ]. When the **band_orientation**[ i ] is equal to 1, the band starts from the horizontal coordinate **band_coordinate**[ i ] and has a height, in units of luma samples, equal to **band_length**[ i ].

In a variant, instead of using an absolute number for the coordinate and the length of the bands, relative numbers with respect to the resolution of the cropped decoded picture can be used instead.

In some embodiments, the dynamic metadata may indicate an integer (or binary) mask of invalid depth samples in the at least one depth image.

In this example, resolutions of the depth image and binary mask are different and, hence, the width and height parameters are specified. A rescaling operation may then be needed, and possibly corresponding signaling to indicate how this rescaling operation is performed, such that the rescaled binary mask resolution matches the resolution of the depth image.

An example of syntax of the metadata sample entry **InvalidDepthSampleEntry** is given in Table 10 which inherits from the class **MetaDataSampleEntry** defined in ISOBMFF.

**Table 10**

| |
|---|
| class InvalidDepthSampleEntry() extends MetaDataSampleEntry ('inde'){ |
| unsigned int(32) mask_width; |
| unsigned int(32) mask_height; |
| } |

An example of syntax of the corresponding sample **InvalidDepthSample** is given in Table 11.

**Table 11**

| |
|---|
| class InvalidDepthSample(){ |
| for (i=0; i < mask_height; i++) { |
| for (j=0; j < mask_width; j++) { |
| unsigned int(1) mask_value[i][j]; |
| unsigned int(7) reserved; |
| } |
| } |
| } |

The syntax element **mask_height** specifies the height of the binary mask.

The syntax element **mask_width** specifies the width of the binary mask.

The syntax element **mask_value**[ i ][ j ] specifies a sample of the binary mask that indicates the invalidity of the co-located sample in the depth image. When the syntax element **mask_value**[ i ][ j ] is equal to 1, the co-located depth sample is invalid. When the syntax element **mask_value** [ i ][ j ] is equal to 0, the co-located depth sample is valid.

In an alternative example, the resolutions of the binary mask and the depth image may be the same, hence, the metadata in the track header of the video track may have been used in order to retrieve the width and height parameters (i.e., no need to specify them in the metadata sample entry **InvalidDepthSampleEntry).**

In some embodiments, the dynamic metadata may indicate a shape mask of invalid depth samples in the at least one depth image.

In this example, the shape mask and the depth image have the same resolution (width and height).

An example of syntax of the metadata sample entry **InvalidDepthSampleEntry** is given in Table 12 which inherits from the class **MetaDataSampleEntry** defined in ISOBMFF.

**Table 12**

| |
|---|
| class InvalidDepthSampleEntry() extends MetaDataSampleEntry ('inde'){ |
| unsigned int(4) number_of_shapes; |
| } |

An example of syntax of the corresponding sample **InvalidDepthSample** may be given in Table 13.

**Table 13**

| |
|---|
| class InvalidDepthSample(){ |
| for (i=0; i < number_of_shapes; i++) { |
| unsigned int(3) shape_type[i]; |
| unsigned int(1) shape_mask_value[i]; |
| unsigned int(12) shape_center_x[i]; |
| unsigned int(12) shape_center_y[i]; |
| unsigned int(12) shape_width[i]; |
| unsigned int(12) shape_height[i]; |
| unsigned int(4) reserved; |
| } |
| } |

The syntax element **number_of_shapes** indicates the number of shapes composing the mask.

The syntax element **shape_type**[ i ] specifies the type of the i-th shape. When equal to 0, the signaled shape is a rectangle. When equal to 1, the shape is an ellipse.

The syntax element **shape_mask_value**[ i ] specifies the transparency of the i-th shape. When the value of **shape_mask_value**[ i ] is equal to 1, the depth samples covered by the shape are invalid. When the value of **shape_mask_value**[ i ] is equal to 0, the depth samples covered by the shape are valid.

The syntax element **shape_center_x**[ i ], **shape_center_y**[ i ], **shape_width**[ i ], **shape_height**[ i ] specify respectively the horizontal coordinate, the vertical coordinate, the width and height of the i-th shape. The interpretation of width and height depends on the shape type. The depth samples whose position are covered by the i-th shape inherit from the invalidity value of this i-th shape indicated by **shape_mask_value**[ i ].

In some embodiments, dynamic metadata signaling the invalid depth sample information may be carried in an auxiliary video track as defined in ISOBMFF.

The invalid depth samples information is then represented and encoded as video.

For this purpose, an auxiliary video track is added to the ISOBMFF formatted file.

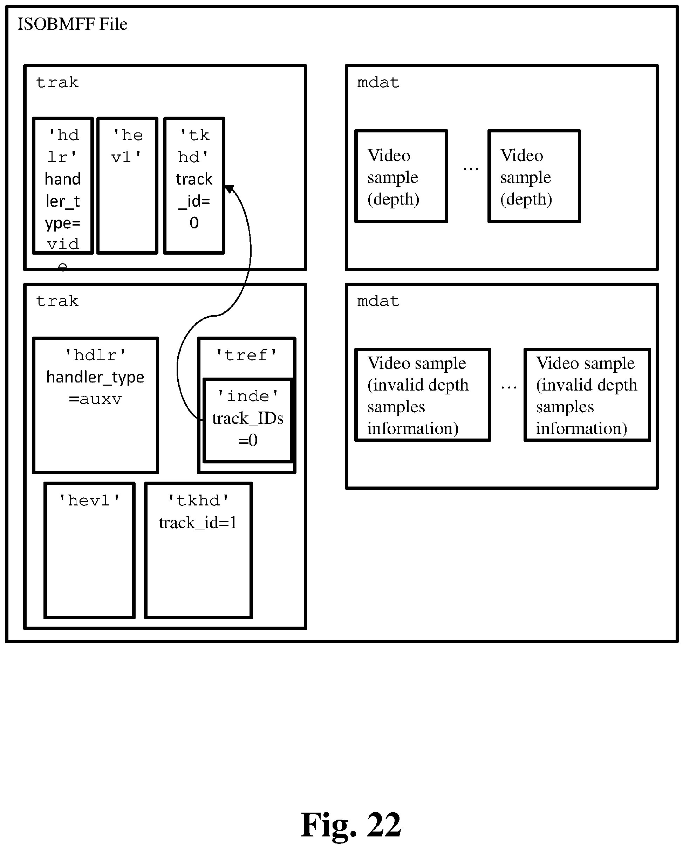

**Figure 22** shows an example of an auxiliary video track carrying dynamic metadata signaling the invalid depth sample information according to some embodiments.

In the example, the formatted ISOBMFF formatted file may comprise two tracks, namely, a video track with id=0, and an auxiliary video track with id = 1. The former is identified by the 'vide' handler type, while the latter by the 'auxv' handler in the HandlerBox of the MediaBox. In this example, both tracks are encoded using the HEVC codec, with the encoding and the tracks following the constraints defined by the 'hev1' sample entry, as specified in the ISO/IEC 14496-15 standard. The auxiliary video track (id=1) contains a track reference (with character code 'tref') to the video track (id=0), which is of a new reference type, namely 'inde', that indicates the purpose of the track and how to use it. The meaning is as follows:
- 'inde' this track contains invalid depth samples information for the referenced video track;
- Video media uses the 'vide' handler type in the HandlerBox of the MediaBox;
- Auxiliary video media uses the 'auxv' handler type in the HandlerBox of the MediaBox;
- An auxiliary video track is coded the same as a video track, but uses this different handler type, and is not intended to be visually displayed (e.g., it contains depth information, or other monochrome or color two-dimensional information). Auxiliary video tracks are usually linked to a video track by an appropriate track reference.

The invalid depth sample information samples and video samples are contained in two 'mdat', as shown in **Figure 22****.**

In a variant, the invalid depth sample information samples and video samples may be contained in one 'mdat', and in that case, the samples may be interleaved.

Video and auxiliary video tracks are contained in the same file, as shown in **Figure 22****.**

In a variant, the two tracks may be contained in two separate files.

In some embodiments, the auxiliary video track contains at least one frame of integer (or binary) masks of invalid depth samples in the at least one depth image.

In some embodiments, the method 100 further comprises assigning a value to each invalid depth sample.

Values assigned to the invalid depth samples may be different values.

For example the value assigned to each invalid depth sample is determined by a value of a valid depth sample indicating that a sample in the at least one depth image is a (real) depth value.

Even if the values assigned to the invalid depth samples are modified/assigned, it is still possible for other devices involved in subsequent processing to determine that these values have been modified/assigned. This can be indicated by signaling the invalid depth sample information despite the modifications has been made to them (the depth samples may appear to be valid).

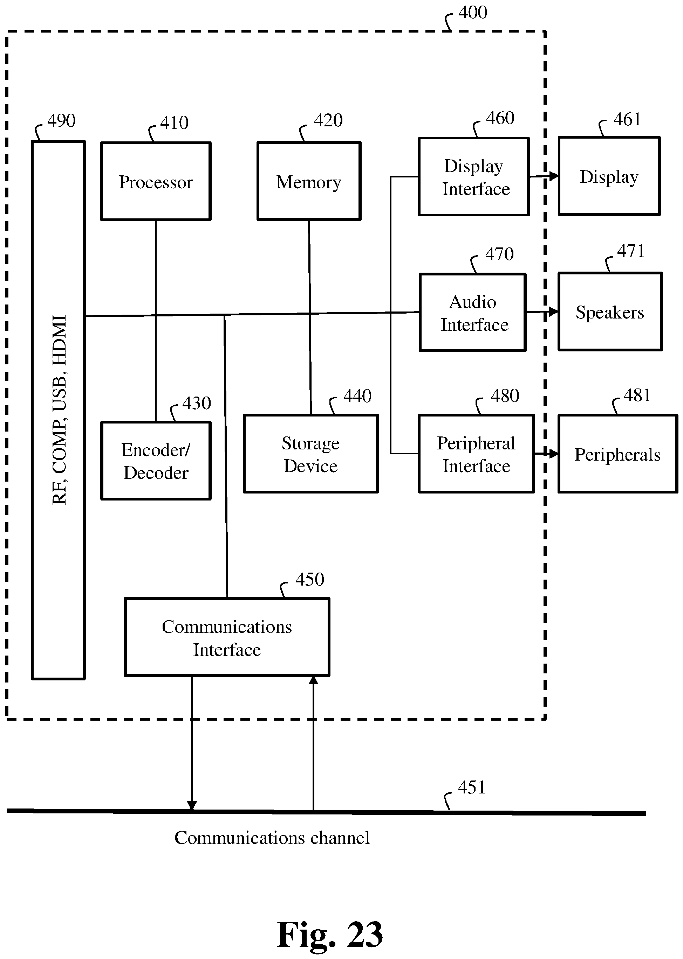

**Figure 23** shows a schematic block diagram illustrating an example of a system 400 in which various aspects and exemplary embodiments are implemented.

System 400 may be embedded as one or more devices including the various components described below. In various exemplary embodiments, system 400 may be configured to implement one or more of the aspects described in the present disclosure.

Examples of equipment that may form all or part of the system 400 include personal computers, laptops, smartphones, tablet computers, digital multimedia set top boxes, digital television receivers, personal video recording systems, connected home appliances, connected vehicles and their associated processing systems, head mounted display devices (HMD, see-through glasses), projectors (beamers), "caves" (system including multiple displays), servers, video encoders, video decoders, post-processors processing output from a video decoder, pre-processors providing input to a video encoder, web servers, video servers (e.g., a broadcast server, a video-on-demand server or a web server), still or video camera, encoding or decoding chip or any other communication devices. Elements of system 400, singly or in combination, may be embodied in a single integrated circuit (IC), multiple iCs, and/or discrete components. For example, in at least one exemplary embodiment, the processing and encoder/decoder elements of system 400 may be distributed across multiple iCs and/or discrete components. In various exemplary embodiments, system 400 may be communicatively coupled to other similar systems, or to other electronic devices, via, for example, a communications bus or through dedicated input and/or output ports.

System 400 may include at least one processor 410 configured to execute instructions loaded therein for implementing, for example, the various aspects described in the present disclosure. Processor 410 may include embedded memory, input output interface, and various other circuitries as known in the art. System 400 may include at least one memory 420 (for example a volatile memory device and/or a non-volatile memory device). System 400 may include a storage device 440, which may include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random-Access Memory (DRAM), Static Random-Access Memory (SRAM), flash, magnetic disk drive, and/or optical disk drive. The storage device 440 may include an internal storage device, an attached storage device, and/or a network accessible storage device, as non-limiting examples.

System 400 may include an encoder/decoder module 430 configured, for example, to process data to provide encoded/decoded video picture data, and the encoder/decoder module 430 may include its own processor and memory. The encoder/decoder module 430 may represent module(s) that may be included in a device to perform the encoding and/or decoding functions. As is known, a device may include one or both encoding and decoding modules. Additionally, encoder/decoder module 430 may be implemented as a separate element of system 400 or may be incorporated within processor 410 as a combination of hardware and software as known to those skilled in the art.

Program code to be loaded onto processor 410 or encoder/decoder 430 to perform the various aspects described in the present disclosure may be stored in storage device 440 and subsequently loaded onto memory 420 for execution by processor 410. In accordance with various exemplary embodiments, one or more of processor 410, memory 420, storage device 440, and encoder/decoder module 430 may store one or more of various items during the performance of the processes described in the present disclosure. Such stored items may include, but are not limited to video picture data, information data used for encoding/decoding video picture data, a bitstream, matrices, variables, and intermediate or final results from the processing of equations, formulas, operations, and operational logic.

In several exemplary embodiments, memory inside of the processor 410 and/or the encoder/decoder module 430 may be used to store instructions and to provide working memory for processing that may be performed during encoding or decoding.

In other exemplary embodiments, however, a memory external to the processing device (for example, the processing device may be either the processor 410 or the encoder/decoder module 430) may be used for one or more of these functions. The external memory may be the memory 420 and/or the storage device 440, for example, a dynamic volatile memory and/or a non-volatile flash memory. In several exemplary embodiments, an external non-volatile flash memory may be used to store the operating system of a television. In at least one exemplary embodiment, a fast external dynamic volatile memory such as a RAM may be used as working memory for video coding and decoding operations, such as for MPEG-2 part 2 (also known as ITU-T Recommendation H.262 and ISO/IEC 13818-2, also known as MPEG-2 Video), AVC, HEVC, EVC, VVC, AV1, etc.

The input to the elements of system 400 may be provided through various input devices as indicated in block 490. Such input devices include, but are not limited to, (i) an RF portion that may receive an RF signal transmitted, for example, over the air by a broadcaster, (ii) a Composite input terminal, (iii) a USB input terminal, (iv) an HDMI input terminal, (v) a bus such as CAN (Controller Area Network), CAN FD (Controller Area Network Flexible Data-Rate), FlexRay (ISO 17458) or Ethernet (ISO/IEC 802-3) bus when the present disclosure is implemented in the automotive domain.

In various exemplary embodiments, the input devices of block 490 may have associated respective input processing elements as known in the art. For example, the RF portion may be associated with elements necessary for (i) selecting a desired frequency (also referred to as selecting a signal, or band-limiting a signal to a band of frequencies), (ii) down-converting the selected signal, (iii) band-limiting again to a narrower band of frequencies to select (for example) a signal frequency band which may be referred to as a channel in certain exemplary embodiments, (iv) demodulating the down-converted and band-limited signal, (v) performing error correction, and (vi) demultiplexing to select the desired stream of data packets. The RF portion of various exemplary embodiments may include one or more elements to perform these functions, for example, frequency selectors, signal selectors, band-limiters, channel selectors, filters, downconverters, demodulators, error correctors, and demultiplexers. The RF portion may include a tuner that performs various of these functions, including, for example, down-converting the received signal to a lower frequency (for example, an intermediate frequency or a near-baseband frequency) or to baseband.

In one set-top box embodiment, the RF portion and its associated input processing element may receive an RF signal transmitted over a wired (for example, cable) medium. Then, the RF portion may perform frequency selection by filtering, down-converting, and filtering again to a desired frequency band.

Various exemplary embodiments rearrange the order of the above-described (and other) elements, remove some of these elements, and/or add other elements performing similar or different functions.

Adding elements may include inserting elements in between existing elements, such as, for example, inserting amplifiers and an analog-to-digital converter. In various exemplary embodiments, the RF portion may include an antenna.

Additionally, the USB and/or HDMI terminals may include respective interface processors for connecting system 400 to other electronic devices across USB and/or HDMI connections. It is to be understood that various aspects of input processing, for example, Reed-Solomon error correction, may be implemented, for example, within a separate input processing IC or within processor 410 as necessary. Similarly, aspects of USB or HDMI interface processing may be implemented within separate interface iCs or within processor 410 as necessary. The demodulated, error corrected, and demultiplexed stream may be provided to various processing elements, including, for example, processor 410, and encoder/decoder 430 operating in combination with the memory and storage elements to process the data stream as necessary for presentation on an output device.

Various elements of system 400 may be provided within an integrated housing. Within the integrated housing, the various elements may be interconnected and transmit data therebetween using suitable connection arrangement 490, for example, an internal bus as known in the art, including the I2C bus, wiring, and printed circuit boards.

The system 400 may include communication interface 450 that enables communication with other devices via communication channel 451. The communication interface 450 may include, but is not limited to, a transceiver configured to transmit and to receive data over communication channel 451. The communication interface 450 may include, but is not limited to, a modem or network card and the communication channel 451 may be implemented, for example, within a wired and/or a wireless medium.

Data may be streamed to system 400, in various exemplary embodiments, using a Wi-Fi network such as IEEE 802.11. The Wi-Fi signal of these exemplary embodiments may be received over the communications channel 451 and the communications interface 450 which are adapted for Wi-Fi communications. The communications channel 451 of these exemplary embodiments may be typically connected to an access point or router that provides access to outside networks including the Internet for allowing streaming applications and other over-the-top communications.

Other exemplary embodiments may provide streamed data to the system 400 using a set-top box that delivers the data over the HDMI connection of the input block"90.

Still other exemplary embodiments may provide streamed data to the system 400 using the RF connection of the input block 490.

The streamed data may be used as a way for signaling information used by the system 400. The signaling information may comprise a bitstream and/or information such a number of pixels of a video picture, any coding/decoding setup parameters, an alignment status, alignment reference data, overlap status, resampling data, interpolation data, and/or calibration data.

It is to be appreciated that signaling may be accomplished in a variety of ways. For example, one or more syntax elements, flags, and so forth may be used to signal information to a corresponding decoder in various exemplary embodiments.

System 400 may provide an output signal to various output devices, including a display 461, speakers 471, and other peripheral devices 481. The other peripheral devices 481 may include, in various examples of exemplary embodiments, one or more of a stand-alone DVR, a disk player, a stereo system, a lighting system, and other devices that provide a function based on the output of system 400.

In various exemplary embodiments, control signals may be communicated between the system"00 and the display 461, speakers 471, or other peripheral devices 481 using signaling such as AV.Link (Audio/Video Link), CEC (Consumer Electronics Control), or other communications protocols that enable device-to-device control with or without user intervention.

The output devices may be communicatively coupled to system 400 via dedicated connections through respective interfaces 460, 470, and 480.

Alternatively, the output devices may be connected to system 400 using the communications channel 451 via the communications interface 450. The display 461 and speakers 471 may be integrated in a single unit with the other components of system 400 in an electronic device such as, for example, a television.

In various exemplary embodiments, the display interface 460 may include a display driver, such as, for example, a timing controller (T Con) chip.

The display 461 and speaker 471 may alternatively be separate from one or more of the other components, for example, if the RF portion of input 490 is part of a separate set-top box. In various exemplary embodiments in which the display 461 and speakers 471 may be external components, the output signal may be provided via dedicated output connections, including, for example, HDMI ports, USB ports, or COMP outputs.

In **Figures 1-22****,** various methods are described herein, and each of the methods includes one or more steps or actions for achieving the described methods. Unless a specific order of steps or actions is required for proper operation of the method, the order and/or use of specific steps and/or actions may be modified or combined.

Some examples are described with regard to block diagrams and/or operational flowcharts. Each block represents a circuit element, module, or portion of code which includes one or more executable instructions for implementing the specified logical function(s). It should also be noted that in other implementations, the function(s) noted in the blocks may occur out of the indicated order. For example, two blocks shown in succession may, in fact, be executed substantially concurrently or the blocks may sometimes be executed in the reverse order, depending on the functionality involved.

The implementations and aspects described herein may be implemented in, for example, a method or a process, an apparatus, a computer program, a data stream, a bitstream, or a signal. Even if only discussed in the context of a single form of implementation (for example, discussed only as a method), the implementation of features discussed may also be implemented in other forms (for example, an apparatus or computer program).

The methods may be implemented in, for example, a processor,which refers to processing devices in general, including, for example, a computer, a microprocessor, an integrated circuit, or a programmable logic device. Processors also include communication devices.

Additionally, the methods may be implemented by instructions being performed by a processor, and such instructions (and/or data values produced by an implementation) may be stored on a computer readable storage medium, such as storage device 440 (**Figure 15**) for instance. A computer readable storage medium may take the form of a computer readable program product embodied in one or more computer readable medium(s) and having computer readable program code embodied thereon that is executable by a computer. A computer readable storage medium as used herein may be considered a non-transitory storage medium given the inherent capability to store the information therein as well as the inherent capability to provide retrieval of the information therefrom. A computer readable storage medium may be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present exemplary embodiments may be applied, is merely an illustrative and not an exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

The instructions may form an application program tangibly embodied on a processor-readable medium.

Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

An apparatus may be implemented in, for example, appropriate hardware, software, and firmware. Examples of such apparatus include personal computers, laptops, smartphones, tablet computers, digital multimedia set top boxes, digital television receivers, personal video recording systems, connected home appliances, head mounted display devices (HMD, see-through glasses), projectors (beamers), "caves" (system including multiple displays), servers, video encoders, video decoders, post-processors processing output from a video decoder, pre-processors providing input to a video encoder, web servers, set-top boxes, and any other device for processing video pictures or other communication devices. As should be clear, the equipment may be mobile and even installed in a mobile vehicle.

Computer software may be implemented by the processor 410 or by hardware, or by a combination of hardware and software. As a non-limiting example, the exemplary embodiments may be also implemented by one or more integrated circuits. The memory 420 may be of any type appropriate to the technical environment and may be implemented using any appropriate data storage technology, such as optical memory devices, magnetic memory devices, semiconductor-based memory devices, fixed memory, and removable memory, as non-limiting examples. The processor 410 may be of any type appropriate to the technical environment, and may encompass one or more of microprocessors, general purpose computers, special purpose computers, and processors based on a multi-core architecture, as non-limiting examples.

As will be apparent to one of ordinary skill in the art based on the present disclosure, implementations may produce a variety of signals formatted to carry information that may be, for example, stored or transmitted. The information may include, for example, instructions for performing a method, or data produced by one of the described implementations. For example, a signal may be formatted to carry the bitstream of a described exemplary embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

The terminology used herein is for the purpose of describing particular exemplary embodiments only and is not intended to be limiting. As used herein, the singular terms "a" "an" and "the" may be intended to include the plural forms as well, unless the context clearly indicates otherwise. It will be further understood that the terms "includes/comprises" and/or "including/comprising" when used in this specification, may specify the presence of stated, for example, features, integers, steps, operations, elements, and/or components but do not preclude the presence or addition of one or more other features, integers, steps, operations, elements, components, and/or groups thereof. Moreover, when an element is referred to as being "responsive" or "connected" or "associated with" to another element, it may be directly responsive or connected to or associated with the other element, or intervening elements may be present. In contrast, when an element is referred to as being "directly responsive" or "directly connected" to or "directly associated with" other element, there are no intervening elements present.

It is to be appreciated that the use of any of the symbol/term "/", "and/or", and "at least one of", for example, in the cases of "A/B", "A and/or B" and "at least one of A and B", may be intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Various numeric values may be used in the present disclosure. The specific values may be for example purposes and the aspects described are not limited to these specific values.

It will be understood that, although the terms first, second, etc. may be used herein to describe various elements, these elements are not limited by these terms. These terms are only used to distinguish one element from another. For example, a first element could be termed a second element, and, similarly, a second element could be termed a first element without departing from the teachings of the present disclosure. No ordering is implied between a first element and a second element.

Reference to "one exemplary embodiment" or "an exemplary embodiment" or "one implementation" or "an implementation", as well as other variations thereof, is frequently used to convey that a particular feature, structure, characteristic, and so forth (described in connection with the embodiment/implementation) is included in at least one embodiment/implementation. Thus, the appearances of the phrase "in one exemplary embodiment" or "in an exemplary embodiment" or "in one implementation" or "in an implementation", as well any other variations, appearing in various places throughout the present disclosure are not necessarily all referring to the same exemplary embodiment.

Similarly, reference herein to "in accordance with an exemplary embodiment/example/implementation" or "in an exemplary embodiment/example/implementation", as well as other variations thereof, is frequently used to convey that a particular feature, structure, or characteristic (described in connection with the exemplary embodiment/example/implementation) may be included in at least one exemplary embodiment/example/implementation. Thus, the appearances of the expression "in accordance with an exemplary embodiment/example/implementation" or "in an exemplary embodiment/example/implementation" in various places in the present disclosure are not necessarily all referring to the same exemplary embodiment/example/implementation, nor are separate or alternative exemplary embodiments/examples/implementations necessarily mutually exclusive of other exemplary embodiments/examples/implementations.

Reference numerals appearing in the claims are by way of illustration only and shall have no limiting effect on the scope of the claims. Although not explicitly described, the present exemplary embodiments/examples and variants may be employed in any combination or sub-combination.

When a figure is presented as a flow diagram, it should be understood that it also provides a block diagram of a corresponding apparatus. Similarly, when a figure is presented as a block diagram, it should be understood that it also provides a flow diagram of a corresponding method/process.

Although some of the diagrams include arrows on communication paths to show a primary direction of communication, it is to be understood that communication may occur in the opposite direction to the depicted arrows.

Various implementations involve decoding. "Decoding", as used in this disclosure, may encompass all or part of the processes performed, for example, on a received video sequence (including possibly a received bitstream which encodes one or more video sequences) in order to produce a final output suitable for display or for further processing in the reconstructed video domain. In various exemplary embodiments, such processes include one or more of the processes typically performed by a decoder. In various exemplary embodiments, such processes also, or alternatively, include processes performed by a decoder of various implementations described in the present disclosure.

As further examples, in one exemplary embodiment "decoding" may refer only to de-quantizing, in one exemplary embodiment "decoding" may refer to entropy decoding, in another exemplary embodiment "decoding" may refer only to differential decoding, and in another exemplary embodiment "decoding" may refer to combinations of de-quantizing, entropy decoding and differential decoding. Whether the phrase "decoding process" may be intended to refer specifically to a subset of operations or generally to the broader decoding process will be clear based on the context of the specific description and is believed to be well understood by those skilled in the art.

Various implementations involve encoding. In an analogous way to the above discussion about "decoding", "encoding" as used in the present disclosure may encompass all or part of the processes performed, for example, on an input video sequence in order to produce an output bitstream. In various exemplary embodiments, such processes include one or more of the processes typically performed by an encoder. In various exemplary embodiments, such processes also, or alternatively, include processes performed by an encoder of various implementations described in this disclosure.

As further examples, in one exemplary embodiment "encoding" may refer only to quantizing, in one exemplary embodiment "encoding" may refer only to entropy encoding, in another exemplary embodiment "encoding" may refer only to differential encoding, and in another exemplary embodiment "encoding" may refer to combinations of quantizing, differential encoding and entropy encoding. Whether the phrase "encoding process" may be intended to refer specifically to a subset of operations or generally to the broader encoding process will be clear based on the context of the specific descriptions and is believed to be well understood by those skilled in the art.

Additionally, the present disclosure may refer to "obtaining" various pieces of information. Obtaining the information may include one or more of, for example, estimating the information, calculating the information, predicting the information, or retrieving the information from memory, processing the information, moving the information, copying the information, erasing the information, calculating the information, determining the information, predicting the information, or estimating the information.

Additionally, this disclosure may refer to "receiving" various pieces of information. Receiving the information may include one or more of, for example, accessing the information, or receiving information from a communication network.

Also, as used herein, the word "signal" refers to, among other things, indicating something to a corresponding decoder. For example, in certain exemplary embodiments the encoder signals a particular information such as coding parameter or encoded video picture data. In this way, in an exemplary embodiment the same parameter may be used at both the encoder side and the decoder side. Thus, for example, an encoder may transmit (explicit signaling) a particular parameter to the decoder so that the decoder may use the same particular parameter. Conversely, if the decoder already has the particular parameter as well as others, then signaling may be used without transmitting (implicit signaling) to simply allow the decoder to know and select the particular parameter. By avoiding transmission of any actual functions, a bit savings is realized in various exemplary embodiments. It is to be appreciated that signaling may be accomplished in a variety of ways. For example, one or more syntax elements, flags, and so forth are used to signal information to a corresponding decoder in various exemplary embodiments. While the preceding relates to the verb form of the word "signal", the word "signal" may also be used herein as a noun.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this disclosure.

## Claims

**1.** A method (100) of signaling at least one invalid depth sample in at least one depth image, the method comprising:
- obtaining (110) an invalid depth sample information representing the at least one invalid depth sample, each invalid depth sample representing a sample in the at least one depth image associated with a missing, undefined or unknown depth value; and
- signaling (120), in a binary data structure, the invalid depth sample information as metadata of the at least one depth image.

**2.** An image processing method (200) comprising:
- receiving (210) a binary data structure comprising an invalid depth sample information representing at least one invalid depth sample in at least one depth image, each invalid depth sample representing a sample in the at least one depth image associated with a missing, undefined or unknown depth value; and
- deriving (220) the at least one invalid depth sample from the invalid depth sample information.

**3.** The method of claim 1 or 2, wherein the invalid depth sample information indicates a region in the at least one depth image.

**4.** The method of claim 3, wherein the invalid depth sample information is defined based on at least one characteristic of the region.

**5.** The method of claim 3, wherein the invalid depth sample information is defined based on horizontal and/or vertical lines in the at least one depth image, delimiting at least one band left, right, above or below the lines.

**6.** The method of claim 3, wherein the region is a corner band defined by a side of the at least one depth image and a length of the corner band.

**7.** The method of claim 3, wherein the region is at least one band of invalid depth samples in the at least one depth image defined by orientation, position and width of said at least one band.

**8.** The method of one of claims 1 to 7, wherein the invalid depth sample information indicates an integer mask of invalid depth samples in the at least one depth image.

**9.** The method of one of claims 1 to 7, wherein the invalid depth sample information indicates a shape mask of invalid depth samples in the at least one depth image, said shape mask being expressed as a collection of geometric shapes of invalid depth samples in a depth image.

**10.** The method of claims 1 to 9, wherein the metadata of the at least one depth image representing the invalid depth sample information is signaled in video bitstream.

**11.** The method of claim 10, wherein the metadata of the at least one depth image representing the invalid depth sample information is signaled as part of a Supplemental Enhancement Information message.

**12.** The method of claim 10, wherein a sequence of at least one integer mask being obtained, each integer mask corresponding to one of the at least one depth image, and wherein a sequence of the at least one depth image is signaled as a sequence of primary pictures constituting a primary picture layer and the sequence of integer masks is signaled as a sequence of invalid depth sample auxiliary pictures constituting an auxiliary picture layer and the sequence of integer masks contains a Supplemental Enhancement Information message or Video Parameter Set to indicate that the type of auxiliary picture layer is invalid depth sample information.

**13.** The method of claim 1 to 10, wherein the metadata of the at least one depth image representing the invalid depth sample information is signaled in a file format.

**14.** The method of claim 13, wherein the file format is based on ISOBMFF formatted file that conforms to the standard ISO/IEC 14496-12.

**15.** The method of claim 13, wherein the metadata of the at least one depth image representing the invalid depth sample information is signaled in the file format as static metadata for the duration of a video track as defined in ISOBMFF formatted file that conforms to the standard ISO/IEC 14496-12.

**16.** The method of claim 13, wherein the metadata of the at least one depth image representing the invalid depth sample information is signaled in the file format as dynamic metadata.

**17.** The method of claim 16, wherein dynamic metadata signaling the invalid depth sample information is carried in a timed metadata track as defined in ISOBMFF formatted file that conforms to the standard ISO/IEC 14496-12.

**18.** The method of claim 16, wherein dynamic metadata signaling the invalid depth sample information is carried in an auxiliary video track as defined in ISOBMFF formatted file that conforms to the standard ISO/IEC 14496-12.

**19.** The method of claim 18, wherein the auxiliary video track contains at least one frame of integer masks of invalid depth samples in the at least one depth image.

**20.** The method of claim 1-19, further comprises assigning a value to each invalid depth sample.

**22.** The method of claim 20, the value assigned to each invalid depth sample is determined by a value of a valid depth sample indicating that a sample in the at least one depth image is a depth value.

**21.** An apparatus comprises means for performing one of the method claimed in any one of claims 1 to 20.

**22.** A computer program product including instructions which, when the program is executed by one or more processors, causes the one or more processors to carry out a method claimed in any one of claims 1 to 20.
